(19) 

Europäisches
Patentamt

European
Patent Office

Office européen
des brevets

(11) **EP 4 773 040 A1**

(12) **EUROPEAN PATENT APPLICATION**
published in accordance with Art. 153(4) EPC

(43) Date of publication:
**08.07.2026 Bulletin 2026/28**

(21) Application number: **23953578.4**

(22) Date of filing: **27.09.2023**

(51) International Patent Classification (IPC):
***G06K 7/14*** *(2006.01)*

(52) Cooperative Patent Classification (CPC):
**G06K 7/1417; G06K 7/1095; G06K 7/1491;**
**G06K 19/06037; G06K 19/06046;**
G06K 2019/06215

(86) International application number:
**PCT/CN2023/122328**

(87) International publication number:
**WO 2025/065426 (03.04.2025 Gazette 2025/14)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **HUAWEI TECHNOLOGIES CO., LTD.**
**Shenzhen 518129 (CN)**

(72) Inventors:
• **LUO, Pengfei**
**Shenzhen, Guangdong 518129 (CN)**

• **LENG, Yongqiang**
**Shenzhen, Guangdong 518129 (CN)**
• **WANG, Wei**
**Shenzhen, Guangdong 518129 (CN)**
• **ZHANG, Jianan**
**Shenzhen, Guangdong 518129 (CN)**
• **ZHANG, Junping**
**Shenzhen, Guangdong 518129 (CN)**

(74) Representative: **MERH-IP Matias Erny Reichl**
**Hoffmann**
**Patentanwälte PartG mbB**
**Paul-Heyse-Straße 29**
**80336 München (DE)**

(54) **IMAGE PROCESSING METHOD AND APPARATUS**

(57)    This application provides an image processing method and apparatus, and relates to the field of image processing technologies. In the method, at least one unit pattern in a first part in a graphic code may be encoded based on at least three different image parameters, to obtain at least three frames of images. In this way, when the at least three frames of images are decoded to obtain the graphic code, the graphic code can be obtained through correct decoding without being affected by a refresh stripe.

FIG. 6a

EP 4 773 040 A1

**Description**

**TECHNICAL FIELD**

Embodiments of this application relate to the field of image processing technologies, and in particular, to an image processing method and apparatus.

**BACKGROUND**

A graphic code (for example, a barcode or a two-dimensional code) may be used to carry information, so that an electronic device decodes the graphic code to obtain the information.

In a related technology, a graphic code may be encoded and then hidden in an image or a video for alternate displaying at a transmit end. However, due to impact of frame-by-frame image refreshing and rolling shutter exposure used by a sensor that collects the graphic code, there is a fusion region (also referred to as a refresh stripe) of two consecutive frames of images in a target image that is obtained by a receive end by shooting images alternately displayed by the transmit end. In this case, when a region in which the refresh stripe is displayed in the shot target image belongs to a display region in which the graphic code is located, a part of the graphic code located in the display region cannot be decoded. As a result, the graphic code cannot be correctly decoded.

**SUMMARY**

To resolve the foregoing technical problem, this application provides an image processing method and apparatus. In the method, at least one unit pattern in a first part in a graphic code may be encoded based on at least three different image parameters, to obtain at least three frames of images. In this way, when the at least three frames of images are decoded to obtain the graphic code, the graphic code can be obtained through correct decoding without being affected by a refresh stripe.

In a possible implementation, this application provides an image processing method. The method includes: obtaining a first graphic code, where the first graphic code includes a first part, to represent target information; encoding the first graphic code to generate at least three frames of images of the first graphic code, where the at least three frames of images include a first image, a second image, and a third image; and at least one first unit pattern in the first part in the first image is encoded based on a first image parameter, the at least one first unit pattern in the first part in the second image is encoded based on a second image parameter, and the at least one first unit pattern in the first part in the third image is encoded based on a third image parameter; and alternately displaying the at least three frames of images to transmit the target information.

The first graphic code is a machine-readable code, and a pattern in the first graphic code may be any pattern, for example, a square grid or a dot.

In addition, same or similar patterns in the first graphic code may be distributed at different locations in the graphic code. Therefore, a pattern that has same or similar patterns in the first graphic code may be referred to as a unit pattern.

For example, when the first graphic code is a two-dimensional code, the unit pattern may be a black grid or a white grid.

When the first graphic code is a barcode, the unit pattern may be a black elongated pattern or a white elongated pattern.

In addition, the unit patterns in the first graphic code may be consecutively distributed or discretely distributed. This is not limited herein.

The pattern may be a consecutive block pattern or a discrete dot pattern.

In addition, the first graphic code may include the first part, and optionally, may include a second part.

The first part may include a pattern representing a bit 1 in the first graphic code, and the second part may include a pattern representing a bit 0 in the first graphic code. For example, if the first graphic code is a black-and-white two-dimensional code, the unit pattern in the black-and-white two-dimensional code may include a black grid and a white grid. The black grid is a unit pattern representing a bit 1, and the white grid is a unit pattern representing a bit 0.

Alternatively, the first part may be a pattern representing a bit 0 in the first graphic code, and the second part may be a pattern representing a bit 1 in the first graphic code.

In addition, the first graphic code may include the first part, but does not include the second part. For example, if the first graphic code is an annular code, a dot displayed in the annular code represents a bit 1, and another location at which no dot is displayed represents a bit 0. Therefore, the second part representing a bit 0 may not be displayed in the annular code.

The first graphic code includes the first part, so that the target information represented by the first graphic code may be represented by a bit 1 or a bit 0 represented by a unit pattern at each pixel location in the first part. The target information may be any information carried in the first graphic code, for example, a link, a password, or an account, and may be specifically configured based on a requirement. This is not limited herein.

An example in which the method is applied to a transmit end and the first graphic code is a black-and-white two-dimensional code is used for description. For example, if the first part is all black grids, the unit pattern included in the first part is a black grid. In this case, a black grid located at a same pixel location (for example, in a first row and a first column) in the black-and-white two-dimensional code may be encoded based on at least three image parameters (for example, encoded with three colors represented by a, b, and c respectively), and a black grid (for example, in the first row and a second column) located at another pixel location in the black-and-white two-dimensional code is also encoded based on at least three image parameters, for example, encoded with three colors or three types of luminance. However, an encoding result of the black grid (for example, encoded with three colors represented by b, c, and a respectively, or encoded with three colors represented by a', b', and c' respectively) at the another pixel location in the black-and-white two-dimensional code may be same as or different from an encoding result of the black grid at another location (for example, in the first row and the first column). This is not limited herein.

In this way, the transmit end encodes each black grid in the black-and-white two-dimensional code with at least three image parameters, where the three image parameters may be luminance or color parameters, so that, in the at least three frames of images obtained by encoding the black-and-white two-dimensional code, the black grid at a same pixel location has different luminance (for example, encoded with at least three types of luminance), or different colors (for example, encoded with at least three colors), or different colors and luminance in the at least three frames of images.

The transmit end may alternately display the at least three frames of images obtained through encoding, to transmit the target information carried in the black-and-white two-dimensional code.

Alternate displaying indicates that the at least three frames of images may be alternately displayed, but a display sequence of the at least three frames of images is not limited.

In this way, the at least three frames of images are alternately displayed, so that the black grid at the same pixel location in the black-and-white two-dimensional code is alternately displayed in three types of luminance (or three colors) in a process of alternately displaying the at least three frames of images, to present effect of blinking and/or color changing of each black grid in the black-and-white two-dimensional code. In this way, human eyes cannot identify the unencoded black-and-white two-dimensional code from the at least three frames of images that are alternately displayed.

An encoding scheme for the second part (for example, a white grid representing a bit 0) in the black-and-white two-dimensional code is not limited in this application.

In some embodiments, the transmit end may not encode the second part in the black-and-white two-dimensional code. For example, the second part is always kept white (an RGB value is 255) in the at least three frames of images. However, due to a luminance change of a black grid, luminance of this white grid can be confused with that of the encoded black grid. Therefore, the white grid cannot be identified by naked eyes in the at least three frames of images, to hide the black-and-white two-dimensional code.

Alternatively, in some embodiments, the second part in the black-and-white two-dimensional code may be encoded. However, a quantity of types of luminance or colors with which a white grid at a same pixel location in the second part is encoded is not limited. For example, the white grid may have a same type of luminance or color, or may be encoded with two types of luminance or colors or three or more types of luminance or colors. This is not limited herein.

In some embodiments, after the white grid in the second part in the black-and-white two-dimensional code is encoded, in the at least three frames of images, a color or luminance change of the white grid in a time sequence is different from a color or luminance change of the black grid in the same time sequence, so that when a receive end decodes the at least three frames of images, a difference result of the black grid in the same time sequence is different from a difference result of the white grid, to distinguish between the black grid and the white grid.

For example, the black grid in the black-and-white two-dimensional code is separately encoded with three types of luminance a, b, and c in an image 1, an image 2, and an image 3 that are sequentially displayed, and the white grid may be sequentially encoded with three types of luminance a, c, and a in the three frames of images, so that an absolute value of a luminance difference of the white grid in any two frames of images in the image 1 to the image 3 in a time sequence is not completely the same as an absolute value of a luminance difference of the black grid.

In a related technology, a region representing a bit 1 or a bit 0 in a graphic code is encoded with two colors, to alternately display two frames of encoded images. However, due to impact of frame-by-frame image refreshing and rolling shutter exposure used by a sensor that collects the graphic code, when a receive end shoots the two frames of images alternately displayed at a transmit end, a refresh stripe exists between a displayed current frame and a displayed previous frame (that is, a fusion region of the two frames) in an image obtained through shooting. The transmit end alternately displays the two frames of images, so that the refresh stripes in the two frames of images shot by the receive end are very close to each other in terms of a location, luminance, and a color. When the receive end performs difference processing based on the two frames of shot images, there is a pixel whose difference result is 0 in the refresh stripe. As a result, the pixel is an all-black region. The receive end cannot quantize the difference result, and a region with the refresh stripe cannot be binarized into 1. When the refresh stripe region is a display region of the encoded graphic code, a partial graphic code in the region in which the refresh stripe is located cannot be decoded. As a result, the graphic code cannot be correctly decoded.

However, in an embodiment of this application, the transmit end alternately displays a same location (the first unit pattern) in the first graphic code, to separately perform color and/or luminance encoding, for example, encodes a pixel at the same location with three colors (which are respectively colors represented by G, B, and W). A fusion region in any frame of image shot by the receive end is a fusion region of a current frame and a previous frame. Because the transmit end encodes the same location in the graphic code with the at least three colors (and/or three types of luminance), between pixels that are in any two frames of images (even two consecutive frames of images) shot by the receive end and that correspond to the same location, luminance (or colors) of fusion regions (for example, refresh stripes) in the two frames of images is different. When the receive end performs difference processing on the two frames of shot images, there is not a location whose difference result is 0 in the refresh stripe. Therefore, the difference result of the refresh stripes does not include an all-black region. Even if the location of the refresh stripe includes a pattern obtained through encoding the first graphic code, the fusion region in which the refresh stripe is located may also be normally quantized, to be binarized into 1, so that the first graphic code can be obtained by correctly decoding the at least three frames of alternately displayed images.

In a possible implementation, the at least three frames of images are alternately displayed at a frequency that cannot be perceived by human eyes. For example, the frequency may be 60 FPS.

In a possible implementation, the at least three frames of images are alternately displayed at a frequency at which the at least three frames of images can be perceived by a sensor associated with the receive end.

In a possible implementation, the first image parameter, the second image parameter, and the third image parameter are different from each other in color space.

For example, the same unit pattern in the first graphic code is encoded with three colors in color space. The color space may be RGB, YUV, or the like. This is not limited. In this way, a same pixel location in the encoded graphic code may be alternately displayed in at least three colors when the at least three frames of images are alternately displayed.

In some embodiments, two colors that are opposite to each other in the color space may exist in the at least three colors, for example, red and green. When the two colors are alternately displayed at a relatively high frequency, yellow is seen by naked eyes. Another encoded color may also be yellow or another color. In this way, human eyes do not perceive a color change of a unit pattern in a first region in the graphic code in the at least three frames of alternately displayed images, to hide the graphic code.

In this embodiment of this application, a pixel at a same location in the first graphic code may be encoded with at least three colors in a color domain, to alternately display the at least three frames of images obtained through encoding. This not only avoids impact of the refresh stripe, but also helps the receive end correctly decode the at least three frames of images to obtain the first graphic code. In addition, the human eyes do not perceive the color change of the unit pattern in the graphic code, to hide the graphic code.

In a possible implementation, luminance of the first image parameter, the second image parameter, and the third image parameter is different from each other.

For example, a same first unit pattern in the first graphic code is encoded with at least three types of luminance. In this way, the same pixel location in the encoded graphic code may be alternately displayed with at least three types of luminance when the at least three frames of images are alternately displayed, to achieve visual effect of blinking of the unit pattern, and facilitate hiding of the graphic code.

In this embodiment of this application, a pixel at a same location in the first graphic code may be encoded with at least three types of luminance in a luminance domain, to alternately display the at least three frames of images obtained through encoding. This not only avoids impact of the refresh stripe, but also helps the receive end correctly decode the at least three frames of images to obtain the first graphic code. In addition, each first unit pattern is displayed in a blinking manner, and the human eyes do not perceive the carried first graphic code, to hide the graphic code.

In a possible implementation, the first graphic code further includes a second part, and the second part in the at least three frames of images is encoded based on a same image parameter.

For descriptions of the second part, refer to the foregoing descriptions. In this embodiment, an example in which the second part is a pattern representing a bit 0 is used for description. A unit pattern representing a bit 0 in the first graphic code is encoded with a same color, same luminance, or a same color and luminance, so that, in the at least three frames of images obtained through encoding, the pattern representing the bit 0 does not change in color and/or luminance. In this way, when the receive end performs corresponding difference processing, a difference result of a region representing the bit 0 is 0 (that is, an all-black region), and a difference result of the first region representing the bit 1 does not include 0. In this way, the receive end can distinguish between the first part and the second part, thereby improving decoding efficiency. In addition, the transmit end does not need to perform complex encoding on the second part, thereby improving encoding efficiency.

In a possible implementation, the first graphic code further includes a second part. At least one second unit pattern in the second part in the first image is encoded based on a fourth image parameter, the at least one second unit pattern in the second part in the second image is encoded based on a fifth image parameter, and the at least one second unit pattern in the second part in the third image is encoded based on a sixth image parameter.

The black-and-white two-dimensional code is still used as an example. The second unit pattern in the second part may be a white grid representing a bit 0. In this embodiment, a white grid at a same pixel location in the black-and-white two-dimensional code may also be encoded with three colors (and/or luminance), so that in the at least three frames of alternately displayed images obtained through encoding, a black grid can change in the three colors (and/or luminance), and the white grid in the black-and-white two-dimensional code can also change in the three color (and/or luminance).

A principle of an encoding scheme for the second unit pattern in this embodiment is similar to a principle of an encoding scheme for the first unit pattern in the foregoing embodiment. Details are not described again. For example, white grids at different pixel locations in the black-and-white two-dimensional code may be encoded with three colors or luminance that may be the same or different. This is not limited herein.

In addition, in the at least three frames of images obtained by the transmit end through encoding, a difference result of the first part between two frames of images in a same time sequence is different from a difference result of the second part, to enable the receive end to decode the at least three frames of images to obtain the first graphic code.

For example, the at least three frames of images are respectively the image 1, the image 2, and the image 3. When the first image parameter to the sixth image parameter are set, it needs to be ensured that there is at least one group of images (two frames of images in the foregoing three frames of images) between which an absolute value of a difference result of a black region (all the black grids) is different from an absolute value of a difference result of a white region (all the white grids), so that the receive end can distinguish between the white region and the black region based on the different difference results of the two regions.

In a possible implementation, the fourth image parameter, the fifth image parameter, and the sixth image parameter are different from each other in the color space.

For example, the same second unit pattern in the first graphic code is encoded with at least three types of luminance. In this way, a same pixel location in the encoded graphic code may be alternately displayed with the at least three types of luminance when the at least three frames of images are alternately displayed, to achieve visual effect of blinking of the second unit pattern, and facilitate hiding of the graphic code.

In this embodiment of this application, the pixel at the same location in the first graphic code may be encoded with at least three types of luminance in a luminance domain, to alternately display the at least three frames of images obtained through encoding. This not only avoids impact of the refresh stripe, but also helps the receive end correctly decode the at least three frames of images to obtain the first graphic code. In addition, each second unit pattern is displayed in a color change manner, and the human eyes do not perceive the carried first graphic code, to hide the graphic code.

In addition, the transmit end encodes each of the first unit pattern and the second unit pattern with the three colors (and/or luminance), to increase difficulty of perceiving the hidden first graphic code by the human eyes. In addition, this also brings greater flexibility and possibility to a decoding scheme used when the receive end obtains the first graphic code through decoding, and enriches a decoding manner. For example, when the receive end performs difference processing on two frames of shot images, it is not limited to that a difference result of a black region does not include 0 (that is, an all-black region) for decoding, and due to a difference, a difference result of a white region does not include 0 (that is, an all-black region) for decoding.

In a possible implementation, luminance of the fourth image parameter, the fifth image parameter, and the sixth image parameter is different from each other.

For example, the same second unit pattern in the first graphic code is encoded with at least three types of luminance. In this way, a same pixel location in the encoded graphic code may be alternately displayed with the at least three types of luminance when the at least three frames of images are alternately displayed, to achieve visual effect of blinking of the second unit pattern, and facilitate hiding of the graphic code.

In this embodiment of this application, a pixel at a same location in the first graphic code may be encoded with at least three types of luminance in a luminance domain, to alternately display the at least three frames of images obtained through encoding. This not only avoids impact of the refresh stripe, but also helps the receive end correctly decode the at least three frames of images to obtain the first graphic code. In addition, each second unit pattern is displayed in a blinking manner, and the human eyes do not perceive the carried first graphic code, to hide the graphic code.

In addition, the transmit end encodes each of the first unit pattern and the second unit pattern with the three colors (and/or luminance), to increase difficulty of perceiving the hidden first graphic code by the human eyes. In addition, this also brings greater flexibility and possibility to a decoding scheme used when the receive end obtains the first graphic code through decoding, and enriches a decoding manner. For example, when the receive end performs difference processing on two frames of shot images, it is not limited to that a difference result of a black region does not include 0 (that is, an all-black region) for decoding, and due to a difference, a difference result of a white region does not include 0 (that is, an all-black region) for decoding.

In a possible implementation, alternately displaying the at least three frames of images to transmit the target information includes: alternately displaying the at least three frames of images on a background image, where a pattern in the background image is related to a pattern in the first graphic code.

The transmit end may display the at least three frames of images as an upper layer of each frame of background image in a layer overlay manner. In this way, the at least three frames of images are alternately displayed on the background image through fusion, and a frame rate of the background image may not be changed.

In this embodiment, the at least three frames of images obtained through encoding are displayed on the background image, and the pattern in the background image is the same as, similar to, or related to the pattern (for example, the first unit pattern or the second unit pattern) in the first graphic code. In this way, the human eyes are less likely to perceive the graphic code, thereby improving hiding effect of the graphic code.

In a possible implementation, the background image is a dynamic image.

The background image may be a dynamic image, for example, a video.

The background image changes dynamically, and the at least three frames of images displayed after the graphic code is encoded also change dynamically. In this way, the human eyes are less likely to perceive the graphic code, thereby improving hiding effect of the graphic code.

In a possible implementation, a size of the pattern in the first graphic code is less than or equal to a size of the related pattern in the background image.

The size of the pattern (for example, at least one of the first unit pattern and the second unit pattern) in the first graphic code is less than or equal to the size of the related pattern in the background image, so that the human eyes are less likely to perceive the graphic code, thereby improving hiding effect of the graphic code.

In a possible implementation, an average value of the first image parameter, the second image parameter, and the third image parameter is related to an image parameter of the background image.

An average color value (or an average luminance value) of the three colors or the three types of luminance for encoding a same unit pattern may be related to (the same as or similar to) a color (or luminance) of a related pattern in the background image. In this way, the at least three frames of images that are obtained through encoding and that have a color (or luminance) change can be fused with the background image, and a pattern color (or luminance) fusion degree is relatively high, so that the hidden graphic code is not easily seen by naked eyes, and the hidden two-dimensional code is not exposed.

A principle of the foregoing implementation of the size and the average value of the image parameters may also be applied to the three image parameters of the second unit pattern, and effect is similar. Details are not described herein again.

In a possible implementation, encoding the first graphic code to generate the at least three frames of images of the first graphic code includes: encoding the first graphic code based on a fourth image to generate the at least three frames of images of the first graphic code.

When the first graphic code is encoded into the at least three frames of images, the first graphic code may be directly encoded, or the first graphic code may be encoded based on the fourth image. For example, a color or luminance of a corresponding unit pattern in the at least three frames of images is determined based on a color or luminance of a pattern in the fourth image. The fourth image may be the background image mentioned in the foregoing implementation, or may be another image. This is not limited herein.

In addition, in some embodiments, when the at least three frames of images are alternately displayed, the fourth image or the background image may be replaced with the at least three frames of images for displaying, or the at least three frames of images may be overlaid on the fourth image or the background image for displaying.

In this way, complexity of the at least three frames of images obtained through encoding is higher, and it is more difficult for the human eyes to directly identify the original first graphic code.

In a possible implementation, alternately displaying the at least three frames of images to transmit the target information includes: alternately displaying the first image, the second image, and the third image, and repeating n alternate display processes, where n is a positive integer.

When the first image, the second image, and the third image are alternately displayed, the first image, the second image, and the third image are not limited to being displayed in a sequence of the first image, the second image, and the third image, and the first image, the second image, and the third image may be alternately displayed in any arrangement sequence. In addition, when the alternate display process of the three frames of images is repeated each time, different alternate display processes are not limited to having a same display sequence or different display sequences of the three frames of images.

For example, the first image, the second image, and the third image are represented as an image M1, an image M2, and an image M3 respectively.

For example, during cyclic displaying, the images may be displayed in sequence as follows: the image M1, the image M2, the image M3, the image M2, the image M1, the image M3, the image M1, the image M2, the image M3, the image M3, the image M2, and the image M1.

In this way, the at least three frames of images are alternately displayed, and the alternate display process is repeated, so that it is more difficult for the human eyes to directly identify the original first graphic code.

In a possible implementation, in the n alternate display processes of the at least three frames of images, at least two alternate display processes have different image display sequences.

For example, during cyclic displaying, a first alternate display process is sequentially displaying the image M1, the image M2, and the image M3; and a second alternate display process during cyclic displaying is sequentially displaying the image M2, the image M1, and the image M3. The two alternate display processes have different display sequences of the at least three frames of images.

In this way, the at least three frames of images are alternately displayed, and the alternate display process is repeated, so that it is more difficult for the human eyes to directly identify the original first graphic code.

In a possible implementation, the at least three frames of images further include at least one frame of fifth image, where the first part in the fifth image is encoded based on the first image parameter. Alternately displaying the at least three frames of images to transmit the target information includes: alternately displaying the first image, the second image, the third image, and the at least one frame of fifth image, and repeating n alternate display processes.

The fifth image may be any type of pattern. Optionally, a pattern in the fifth image is related to (the same as or similar to) a pattern in the first graphic code.

For example, the fifth image is also a graphic code, and the first part (for example, a part representing a bit 1) in the fifth image is encoded based on the first image parameter.

When the at least three frames of images are alternately displayed, the at least three frames of images further include the at least one frame of fifth image, and different frames of fifth images may be a same image or different images.

In this way, when the first image, the second image, and the third image are alternately displayed, the at least one frame of fifth image in which the first part is encoded in a constant sequence may be inserted at a same location in each alternate display process, to increase complexity of encoding the first graphic code and difficulty of identifying the first graphic code by the human eyes from the alternately displayed images.

In addition, the at least three frames of images may also include a sixth image. Similar to the fifth image, the second part in the sixth image is encoded based on the fourth image parameter (or the fifth image parameter or the sixth image parameter).

In a possible implementation, an image display sequence corresponding to at least one alternate display process of the at least three frames of images is the first image, the second image, and the third image, and the second image parameter is related to an average value of the first image parameter and the third image parameter.

In an alternate display process of three frames of images, when the three frames of images are displayed in a sequence of the first image, the second image, and the third image, the second image parameter corresponding to the second image displayed in the middle may be the average value (or close to the average value) of the first image parameter and the third image parameter that correspond to the first image and the third image respectively. In this way, when the three frames of images are alternately displayed, a color or luminance of the at least one first unit pattern in the first region may uniformly change.

Certainly, in n alternate display processes of the at least three frames of images, a display sequence, corresponding to another alternate display process, of the first image, the second image, and the third image may change.

Similarly, in some embodiments, the fifth image parameter may also be related to an average value of the fourth image parameter and the sixth image parameter.

In a possible implementation, this application provides an image processing method. The method includes: shooting at least three frames of images alternately displayed on a screen of a transmit end, to obtain at least two frames of images, where the at least three frames of images are an encoding result of a first graphic code; and the at least three frames of images include a first image, a second image, and a third image, where at least one first unit pattern in the first part in the first image is encoded based on a first image parameter, the at least one first unit pattern in the first part in the second image is encoded based on a second image parameter, and the at least one first unit pattern in the first part in the third image is encoded based on a third image parameter; calculating a difference between image parameters for at least one group of two frames of images in the at least two frames of images; and obtaining the first graphic code based on the difference, to obtain target information represented by the first graphic code.

For example, the method is applied to a receive end. The receive end may shoot the at least three frames of images alternately displayed by the transmit end after the first graphic code is encoded, to obtain two frames of images, three frames of images, or more than three frames of images.

In the at least three frames of images alternately displayed by the transmit end, the at least one first unit pattern in the first part in three frames of images is encoded based on different image parameters. For a specific encoding process, refer to the embodiments of the image processing method applied to the transmit end. Details are not described herein again.

Due to impact of frame-by-frame image refreshing and rolling shutter exposure used by a sensor that collects the graphic code, when the receive end shoots two frames of images alternately displayed by the transmit end, there is probably a refresh stripe between a displayed current frame and a displayed previous frame (that is, a fusion region of the two frames) in an image obtained through shooting. However, in the at least three frames of images encoded by the transmit end, a same corresponding pixel location may be differently encoded in a color domain and/or a luminance domain. For example, in luminance, in the first unit pattern alternately displayed in three types of luminance in the at least three frames of images, luminance of fusion regions in the at least two frames of images obtained by the receive end through shooting is not completely the same. Therefore, the receive end may perform difference processing on at least one group of images (where one group of images includes two frames of images) in the at least two frames of shot images, and there is definitely no all-black region whose value is 0 at a location corresponding to a refresh stripe in a difference result. The receive end may obtain the first graphic code through decoding based on this difference, to obtain the target information expressed by the first graphic code.

In a possible implementation, each of the at least two frames of images includes a fusion region, where the fusion region is a fused image of two frames of adjacently displayed images in the at least three frames of images displayed on the screen.

Each of the at least two frames of images shot by the receive end may include a fusion region (for example, a refresh stripe) between a current frame and a previous frame that are displayed by the transmit end.

In a possible implementation, the at least two frames of images include a fourth image and a fifth image that are obtained through sequential shooting. Calculating the difference between the image parameters for the at least one group of two frames of images in the at least two frames of images includes: calculating the difference between the image parameters for the fourth image and the fifth image.

The receive end may shoot the at least three frames of images alternately displayed by the transmit end, and obtain the fourth image, the fifth image, and the like through sequential shooting. The receive end may perform difference processing on two frames of continuously shot images (the fourth image and the fifth image herein). Because the transmit end encodes at least one first unit pattern in a first region based on three image parameters, to obtain the at least three frames of displayed images, no pixel whose difference is 0 exists in a refresh stripe (fusion region) in a difference result herein. The receive end may obtain the first graphic code through direct decoding based on a group of obtained differences.

In a possible implementation, there are three or more frames of images in the at least two frames of images.

In this embodiment, when shooting the at least three frames of images alternately displayed by the transmit end, the receive end may consecutively shoot three or more than three frames of images.

In a possible implementation, calculating the difference between the image parameters for the at least one group of two frames of images in the at least two frames of images includes: separately calculating a difference between image parameters for at least two groups of images in at least three frames of images obtained through shooting, to obtain at least two groups of differences, where each group of images in the at least two groups of images include two frames of images; and obtaining the first graphic code based on the difference, to obtain the target information represented by the first graphic code includes: fusing the at least two groups of differences to obtain the first graphic code.

It is considered that the first graphic code may not be completely obtained through decoding based on a single difference result obtained by performing difference processing on two frames of shot images and that only a part of the first graphic code may be obtained through decoding based on the single difference result. Therefore, in this embodiment, the receive end may select at least two groups of images from the three or more frames of images obtained through shooting, to separately perform difference processing. Then, the receive end may fuse the at least two groups of difference results to obtain the first graphic code, to improve decoding accuracy.

For example, a first frame and a third frame that are obtained through shooting are selected to calculate a difference, and the first frame and a second frame that are obtained through shooting are selected to calculate a difference, so as to obtain two groups of difference results.

In a possible implementation, fusing the at least two groups of differences to obtain the first graphic code includes: performing binarization processing on the at least two groups of differences to obtain at least two groups of binarization results; and performing an AND operation on the at least two groups of binarization results to obtain the first graphic code.

In this embodiment, when the at least two groups of difference results are fused, binarization processing may be first performed on each group of difference results, to obtain a binarized image (each pixel is represented by 1 or 0), and then the logical AND operation is performed on the at least two groups of binarization results, to obtain the first graphic code.

In a possible implementation, fusing the at least two groups of differences to obtain the first graphic code includes: performing addition on the at least two groups of differences to obtain an addition result; and performing binarization processing on the addition result to obtain the first graphic code.

In this embodiment, when the at least two groups of difference results are fused, an addition operation may be first performed on each group of difference results by pixel, and then binarization processing is performed on an obtained addition result, to obtain the first graphic code through conversion.

In a possible implementation, this application provides an image processing apparatus. The image processing apparatus includes: an obtaining module, configured to shoot at least three frames of images alternately displayed on a screen of a transmit end, to obtain at least two frames of images, where the at least three frames of images are an encoding result of a first graphic code, and the at least three frames of images include a first image, a second image, and a third image, where at least one first unit pattern in the first part in the first image is encoded based on a first image parameter, the at least one first unit pattern in the first part in the second image is encoded based on a second image parameter, and the at least one first unit pattern in the first part in the third image is encoded based on a third image parameter; an encoding module, configured to calculate a difference between image parameters for at least one group of two frames of images in the at least two frames of images; and a display module, configured to obtain the first graphic code based on the difference, to obtain target information represented by the first graphic code.

In a possible implementation, the first image parameter, the second image parameter, and the third image parameter are different from each other in color space.

In a possible implementation, luminance of the first image parameter, the second image parameter, and the third image parameter is different from each other.

In a possible implementation, the first graphic code further includes a second part, and the second part in the at least three frames of images is encoded based on a same image parameter.

In a possible implementation, the first graphic code further includes a second part. At least one second unit pattern in the second part in the first image is encoded based on a fourth image parameter, the at least one second unit pattern in the second part in the second image is encoded based on a fifth image parameter, and the at least one second unit pattern in the second part in the third image is encoded based on a sixth image parameter.

In a possible implementation, the fourth image parameter, the fifth image parameter, and the sixth image parameter are different from each other in the color space.

In a possible implementation, luminance of the fourth image parameter, the fifth image parameter, and the sixth image parameter is different from each other.

In a possible implementation, the display module is specifically configured to alternately display the at least three frames of images on a background image, where a pattern in the background image is related to a pattern in the first graphic code.

In a possible implementation, the background image is a dynamic image.

In a possible implementation, a size of the pattern in the first graphic code is less than or equal to a size of the related pattern in the background image.

In a possible implementation, an average value of the first image parameter, the second image parameter, and the third image parameter is related to an image parameter of the background image.

In a possible implementation, the encoding module is specifically configured to encode the first graphic code based on a fourth image, to generate the at least three frames of images of the first graphic code.

In a possible implementation, the display module is specifically configured to: alternately display the first image, the second image, and the third image, and repeat n alternate display processes, where n is a positive integer.

In a possible implementation, in the n alternate display processes of the at least three frames of images, at least two alternate display processes have different image display sequences.

In a possible implementation, the at least three frames of images further include at least one frame of fifth image, where the first part in the fifth image is encoded based on the first image parameter. The display module is specifically configured to: alternately display the first image, the second image, the third image, and the at least one frame of fifth image, and repeat n alternate display processes.

In a possible implementation, an image display sequence corresponding to at least one alternate display process of the at least three frames of images is the first image, the second image, and the third image, and the second image parameter is related to an average value of the first image parameter and the third image parameter.

Effect of the image processing apparatus in the implementations is similar to effect of the image processing method in the implementations. Details are not described herein again.

In a possible implementation, this application provides an image processing apparatus. The image processing apparatus includes: a shooting module, configured to shoot at least three frames of images alternately displayed on a screen of a transmit end, to obtain at least two frames of images, where the at least three frames of images are an encoding result of a first graphic code, and the at least three frames of images include a first image, a second image, and a third image, where at least one first unit pattern in the first part in the first image is encoded based on a first image parameter, the at least one first unit pattern in the first part in the second image is encoded based on a second image parameter, and the at least one first unit pattern in the first part in the third image is encoded based on a third image parameter; a calculation module, configured to calculate a difference between image parameters for at least one group of two frames of images in the at least two frames of images; and an obtaining module, configured to obtain the first graphic code based on the difference, to obtain target information represented by the first graphic code.

In a possible implementation, each of the at least two frames of images includes a fusion region, where the fusion region is a fused image of two frames of adjacently displayed images in the at least three frames of images displayed on the screen.

In a possible implementation, the at least two frames of images include a fourth image and a fifth image that are obtained through sequential shooting; and the calculation module is specifically configured to calculate the difference between the image parameters for the fourth image and the fifth image.

In a possible implementation, there are three or more frames of images in the at least two frames of images.

In a possible implementation, the calculation module is specifically configured to separately calculate a difference between image parameters for at least two groups of images in at least three frames of images obtained through shooting, to obtain at least two groups of differences, where each group of images in the at least two groups of images includes two frames of images. The obtaining module is specifically configured to fuse the at least two groups of differences to obtain the first graphic code.

In a possible implementation, the obtaining module is specifically configured to: perform binarization processing on the at least two groups of differences to obtain at least two groups of binarization results; and perform an AND operation on the at least two groups of binarization results to obtain the first graphic code.

In a possible implementation, the obtaining module is specifically configured to: perform addition on the at least two groups of differences to obtain an addition result; and perform binarization processing on the addition result to obtain the first graphic code.

Effect of the image processing apparatus in the implementations is similar to effect of the image processing method in the implementations. Details are not described herein again.

In a possible implementation, this application provides an image processing apparatus. The image processing apparatus includes one or more interface circuits and one or more processors, where the interface circuit is configured to: receive a signal from a memory, and send the signal to the processor, where the signal includes computer instructions stored in the memory; and when the processor executes the computer instructions, the processor may implement the image processing method in any one of the foregoing implementations.

Effect of the image processing apparatus in this implementation is similar to effect of the image processing method in the implementations. Details are not described herein again.

In a possible implementation, this application provides a computer-readable storage medium. The computer-readable storage medium stores a computer program. When the computer program is run on a computer or a processor, the computer or the processor is enabled to perform the image processing method in any one of the foregoing implementations.

Effect of the computer-readable storage medium in this implementation is similar to effect of the image processing method in the implementations. Details are not described herein again.

In a possible implementation, this application provides a computer program product. The computer program product includes a software program. When the software program is executed by a computer or a processor, the image processing method in any one of the foregoing implementations is performed.

Effect of the computer program product in this implementation is similar to effect of the image processing method in the implementations. Details are not described herein again.

## BRIEF DESCRIPTION OF DRAWINGS

To describe technical solutions in embodiments of this application more clearly, the following briefly describes accompanying drawings for describing embodiments of this application. It is clear that the accompanying drawings in the following descriptions show merely some embodiments of this application, and a person of ordinary skill in the art may still derive other drawings from these accompanying drawings without creative efforts.

FIG. 1 is a diagram of an example of a two-dimensional code;

FIG. 2 is a diagram of an example of image refreshing and displaying;

FIG. 3 is a diagram of an example of an image shooting process;

FIG. 4a is a diagram of an example of an image processing process in a conventional technology;

FIG. 4b is a diagram of an example of an image processing process in this application;

FIG. 5a is a diagram of an example of an image decoded in a conventional technology;

FIG. 5b is a diagram of an example of an image decoded in this application;

FIG. 6a is a diagram of an example of a processing process of a transmit end;

FIG. 6b is a diagram of an example of a processing process of a transmit end;

FIG. 7a is a diagram of an example of a plurality of graphic codes;

FIG. 7b is a diagram of an example of an annular code;

FIG. 8 is a diagram of an example of an image decoded by a receive end;

FIG. 9 is a diagram of a structure of an apparatus according to an embodiment of this application; and

FIG. 10 is a diagram of a structure of a chip according to an embodiment of this application.

**DESCRIPTION OF EMBODIMENTS**

The following clearly and completely describes technical solutions in embodiments of this application with reference to accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for associated objects and indicates that three relationships may exist. For example, A and/or B may indicate the following three cases: Only A exists, both A and B exist, and only B exists.

In the specification and claims of embodiments of this application, the terms "first", "second", and the like are intended to distinguish between different objects but do not indicate a particular order of the objects. For example, a first target object and a second target object are intended to distinguish between different target objects, but are not used to describe a particular sequence of the target objects.

In embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a related concept in a specific manner.

In descriptions of embodiments of this application, unless otherwise stated, "a plurality of" means two or more than two. For example, a plurality of processing units are two or more processing units, and a plurality of systems are two or more systems.

A two-dimensional code, also referred to as a two-dimensional barcode, records data symbol information by using a black-and-white pattern in which specific geometric figures are distributed on a plane (in a two-dimensional direction) according to a specific rule. In coding, a concept of "0" and "1" bit streams that constitute an internal logic basis of a computer is skillfully utilized, several geometric shapes corresponding to a binary are used to represent text and value information, and automatic information processing is implemented through automatic reading of an image input device or a photoelectric scanning device. The two-dimensional code has some commonalities with a barcode technology: Each code system has its specific character set; each character occupies a specific width; and the two-dimensional code has a specific check function and the like. In addition, the two-dimensional code also has functions of automatically identifying information in different rows and processing a graph rotation change.

To make the computer identify the two-dimensional code, the internal logic of the computer is used. Digits "0" and "1" are used as codes, and the several geometric shapes corresponding to the binary are used to represent the text and value information. In the two-dimensional code, a white block represents binary "0", and a black block represents binary "1". A camera can identify a color and an arrangement to interpret information included in the two-dimensional code.

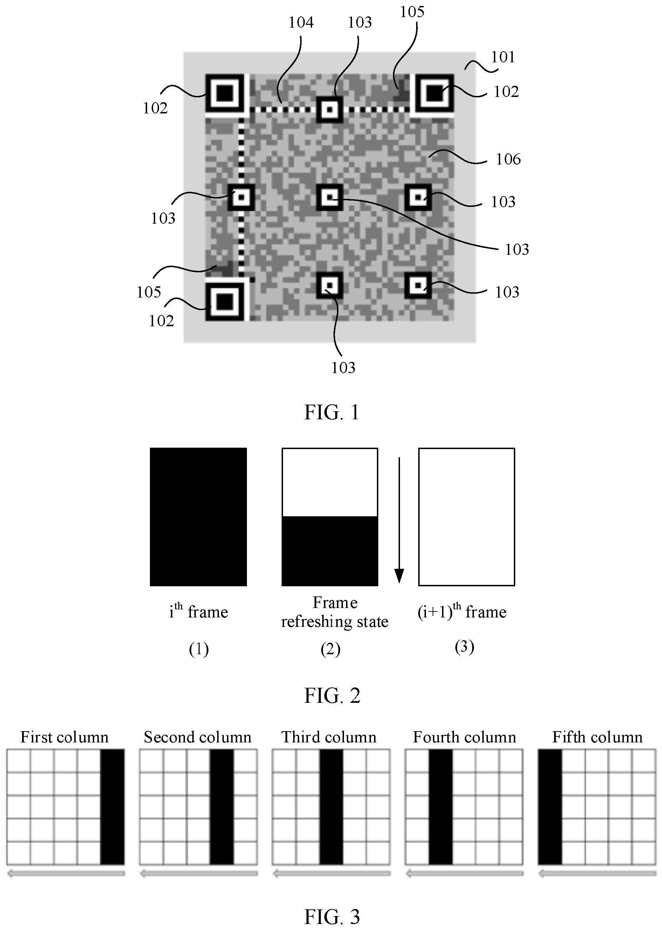

As shown in FIG. 1, a standard two-dimensional code can be identified based on six components:

Quiet zone (Quiet zone) 101: is a blank border on an outer side of the two-dimensional code. Without this border, a two-dimensional code reader cannot determine, due to external interference, content that the two-dimensional code includes and content that the two-dimensional code does not include.

Position pattern (Position pattern) 102: The two-dimensional code usually includes three black blocks in a lower left corner, an upper left corner, and an upper right corner. These blocks notify the two-dimensional code reader that it sees the two-dimensional code, and notify the two-dimensional code reader of a location of the external border of the two-dimensional code.

Alignment pattern (Alignment pattern) 103: for example, another smaller block located at a location near a lower right corner of the two-dimensional code, is used to ensure that the two-dimensional code can still be read when it is tilted or at an angle.

Timing pattern (Timing pattern) 104: is an L-shaped line among the three blocks of the position pattern 102. The timing pattern 104 helps the reader identify each block in the entire two-dimensional code, and also makes it possible to read a damaged two-dimensional code.

Version information (Version information) 105: for example, a small information region near the position pattern 102 in the upper right corner of the two-dimensional code, marks a version of the two-dimensional code being read.

Data cell (Data cell) 106: is a remaining block of the two-dimensional code, and is used to convey actual information, that is, an included URL, phone number, or message.

The two-dimensional code is a graphic code. In this application, target information (for example, a link, a phone number, a message, or an account password, which is not limited) may be carried in the graphic code. The graphic code may further include a barcode, a graphic code including a customized pattern, or the like. This is not limited herein. Regardless of which type of a graphic code, similar to the two-dimensional code, the graphic code may include a graphic corresponding to "0" or "1", to represent target information carried in the graphic code. An electronic device decodes the graphic representing "0" or "1" in the graphic code, to obtain the target information through decoding.

Currently, display devices such as an electronic billboard, a computer, and a television screen including a light-emitting diode (LED) or a liquid crystal display (LCD) are everywhere. These display devices can display information, for example, a video or an image. In some scenarios, in an information push method based on visible light communication (VLC) in a conventional technology, some target information (for example, a link or an account password, which is not limited) may be embedded in the video or the image displayed by the display device in a form of a graphic code (for example, a two-dimensional code, a barcode, or a graphic code including a customized pattern), and the graphic code embedded in the video or the image displayed by the display device cannot be detected by human eyes. The electronic device may shoot display content of the display device, and decode a shot image, to obtain the graphic code embedded in the video or the image, to obtain the target information.

In some application scenarios, the display device may display an actor wearing video. The electronic device shoots a wearing image displayed by the display device, and decodes the shot wearing image, to obtain target information, such as a commodity introduction and a purchase link, that is about wearing clothes and that is embedded in the wearing video.

In some application scenarios, electronic devices may be interconnected to perform data synchronization, for example, a new mobile phone and an old mobile phone are interconnected to clone data of the old mobile phone to the new mobile phone, or a mobile phone and a smartwatch are interconnected. When the electronic devices are interconnected, a screen of one electronic device may include a graphic code in an image or a video. A color, luminance, layout, and the like of the graphic code are related to the image or the video. In this way, although the image or the video and the graphic code are displayed on the screen, the graphic code cannot be identified from the image or the video by naked eyes, to hide the graphic code.

For example, when the new mobile phone and the old mobile phone are interconnected to clone the data of the old mobile phone to the new mobile phone, the foregoing image is an image including black and white grids similar to a graphic of a two-dimensional code, and the two-dimensional code is further displayed on the image in a manner of layer overlay, where the two-dimensional code carries target information of a service set identifier (Service Set Identifier, SSID) and a password of Wi-Fi used to establish a connection. In this case, the old mobile phone displays, on a screen, the image carrying the two-dimensional code, and the new mobile phone scans the image, to obtain, through decoding, the two-dimensional code carried in the image, and processes the two-dimensional code to obtain the SSID and the password of the Wi-Fi, so as to implement interconnection between the old mobile phone and the new mobile phone, and perform data cloning.

For another example, when the mobile phone and the smartwatch are interconnected, a screen of the smartwatch may display a particle animation, and a graphic code including particles invisible to human eyes is further hidden in the particle animation, where the graphic code carries target information used for interconnection. The mobile phone shoots the particle animation displayed on the smartwatch, and decodes a shot picture frame (a frame sequence), to obtain the target information expressed by the hidden graphic code, so as to implement interconnection between the mobile phone and the smartwatch based on the target information.

In a related technology, when an electronic device serving as a transmit end embeds target information in an original image or video in a form of a graphic code, for example, the graphic code is a two-dimensional code, and another graphic code is similar, the electronic device may encode a black region (a region in which all black grids are located) in the two-dimensional code with a color A1 (for example, red), and encode a white region (a region in which all white grids are located) in the two-dimensional code with a color B1 (for example, green), to obtain one frame of encoded image C1. The electronic device may encode the black region (the region in which all the black grids are located) in the two-dimensional code with another color A2 (for example, green), and encode the white region (the region in which all the white grids are located) in the two-dimensional code with another color B2 (for example, red), to obtain one frame of encoded image C2. The color A1 is different from the color A2, and the color B1 is different from the color B2. However, whether the color A1 is the same as the color B1 is not limited. That is, in the related technology, the white region in the two-dimensional code may be encoded with two colors, and the black region may be encoded with two colors. In this way, an encoded graphic code can be obtained. The graphic code is output on a display of the electronic device as two alternate frames (which are an image C1 and an image C2 respectively) displayed at a high rate, for example, at a frame rate of 60 frames per second (for example, a play frequency is 60 hertz (Hz)). The red and the green are yellow to human eyes when being quickly refreshed and displayed. In this way, both the black region and the white region in the graphic code are blinking yellow to the human eyes, and the graphic code may be used as a background image or a part of a background image in the original image or video output by the electronic device, so that the graphic code can be hidden in the original image or video displayed on the display. In this way, in the related technology, hidden encoding of the two-dimensional code can be implemented based on a feature that persistence of vision of human eyes is insensitive to a color.

Therefore, in the related technology, the graphic code is encoded into the two frames of images (for example, the image C1 and the image C2) in different colors.

However, when another electronic device serving as a receive end shoots the two frames of alternately displayed images output on the display of the electronic device serving as the transmit end, the another electronic device shoots a fused image of the two frames of images (also referred to as a refresh stripe of the two frames of images). In this case, when there is the refresh stripe in the image shot by the receive end, and when the graphic code is hidden in a region in which the refresh stripe is located in the shot image, the receive end cannot obtain the complete graphic code through decoding, and consequently cannot obtain the target information through correct decoding.

The following describes the foregoing technical problems in the method in the related technology in detail with reference to FIG. 2, FIG. 3, FIG. 4a, and FIG. 5a.

FIG. 2 is a diagram of an example of a principle of refreshing and displaying an image on a screen of a transmit end. As shown in FIG. 2, a screen of a current electronic device (for example, the transmit end) refreshes and displays an image frame in a row-by-row refreshing manner. FIG. 2 is described by using an example in which a black image and a white image are refreshed and displayed. (1) in FIG. 2 shows an $i^{th}$ frame (for example, i=1, which is not limited) of image displayed on the screen of the transmit end, where the image is the black image. Then, (2) in FIG. 2 shows an image displayed on the screen in a frame refreshing state, and the transmit end may refresh, row by row, the image displayed on the screen. In a frame refreshing process, an $(i+1)^{th}$ frame of image, namely, a next frame of image (for example, the white image), may replace the previous frame of image (which is the black image herein) row by row, so that a display range of the next frame of image becomes larger until the entire screen is filled, to refresh and display the $(i+1)^{th}$ frame of image (which is the white image herein) shown in (3) in FIG. 2.

In the example in FIG. 2, the screen of the transmit end displays the black image in the $i^{th}$ frame, and displays the white image in the $(i+1)^{th}$ frame. During refreshing, the white image may update the black image row by row from top to bottom in a direction of an arrow shown in (2) in FIG. 2 until the entire screen is full of the white image. The same rule applies to alternately display the black image and the white image by the transmit end. Therefore, an existing screen refresh principle results in coexistence of the previous frame and the next frame in the image displayed by the transmit end. Similarly, in the related technology, the alternately displayed image C1 and image C2 also coexist for displaying on the screen of the transmit end.

FIG. 3 is a diagram of an example of a principle of shooting an image by a receive end.

Refer to FIG. 3, a camera of a current electronic device is generally a CMOS sensor camera. This sensor performs exposure in a rolling shutter exposure manner, to shoot the image. As shown in FIG. 3, an image sensor array with five rows and five columns is used as an example for description. During exposure, the sensor may sequentially perform exposure column by column in a right-to-left sequence shown by arrows. For example, when a first column is exposed, other columns are not exposed. After exposure of the first column ends, exposure of a second column starts, and so on, until exposure of all columns (which are the five columns herein) ends, to shoot the image.

In this case, in an exposure process of the camera sensor of the electronic device, if a shot object moves, the movement is recorded in a rolling exposure process.

For example, in the solution of the related technology, when the transmit end plays the alternately displayed image C1 and image C2 on the screen at a frequency of 60 Hz, a mobile phone serving as a receive end shoots, at 60 FPS (Frames Per Second, frames per second), the images that are alternately displayed on the screen of the transmit end. As a result, row-by-row refreshing of the screen of the transmit end and row-by-row (column-by-column) exposure of the camera sensor of the receive end may result in fusion of the image C1 and the image C2 in a video frame shot by the receive end, and a color in a fusion region of the two frames of images is a color obtained by averaging colors of the current frame and the previous frame based on a ratio (for example, a fusion percentage is related to a distance, and this is not limited herein).

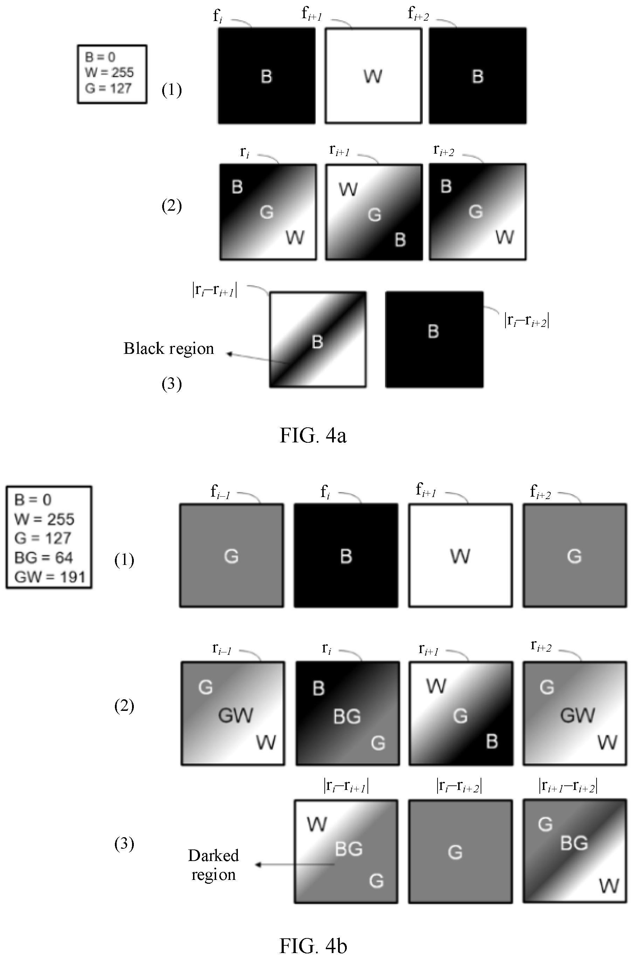

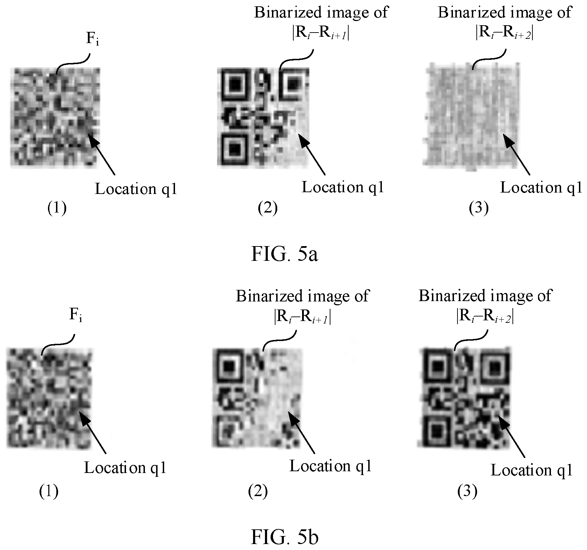

Refer to FIG. 4a, and FIG. 5a. An example in which the transmit end carries the encoded two-dimensional code in the original video is used for description. The original video is a dynamic video in which black grids and white grids consecutively change. The two-dimensional code is encoded into the image C1 and the image C2 by using the solution of the related technology. For example, the black region in the two-dimensional code is encoded with black, and the white region in the two-dimensional code is encoded with white, to obtain the image C1; and the black region in the two-dimensional code is encoded with white, and the white region in the two-dimensional code is encoded with black, to obtain the image C2. In this way, when the image C1 and the image C2 are synthesized and displayed in the original video, human eyes cannot distinguish the two-dimensional code on the display of the transmit end, to present a dynamic video in which colors of the black grids and the white grids consecutively change between black and white. This is similar to effect of a dynamic grid grayscale change.

(1) in FIG. 5a shows an example of a frame of image $F_i$ of a grid video that carries the encoded two-dimensional code and that is displayed on the display of the transmit end. The receive end may shoot the grid video displayed on the display of the transmit end to obtain three frames of images: an image $R_i$, an image $R_{i+1}$, and an image $R_{i+2}$, and decode the three frames of images to obtain the two-dimensional code.

In FIG. 4a, a single grid at a same location in the grid video is used as an example to describe a decoding process of the receive end. The same rule applies to other grids. Details are not described herein again.

For example, display content at a location q1 shown in (1) in FIG. 5a is a grid in the encoded two-dimensional code. The grid at the location q1 may be consecutively refreshed and displayed between black and white according to the encoding scheme in the related technology.

(1) in FIG. 4a shows three frames of images of the grid at the location q1 shown in (1) in FIG. 5a: an image $f_i$, an image $f_{i+1}$, and an image $f_{i+2}$, in an image $F_i$, an image $F_{i+1}$, and an image $F_{i+2}$ that are sequentially displayed on the screen of the transmit end.

In FIG. 4a, B represents black (an RGB value is 0), G represents gray (an RGB value is 127), and W represents white (an RGB value is 255).

A color of the image $f_i$ is represented by B as black, a color of the image $f_{i+1}$ is white, a color of the image $f_{i+2}$ is black, and the like. Similarly, a color of an image $f_{i+3}$ is white. Details are not described herein again.

With reference to the screen refresh principle of the transmit end and the image shooting principle of the receive end that are described in FIG. 2 and FIG. 3, (2) in FIG. 4a shows three frames of images of the grid at the location q1 shown in (1) in FIG. 5a: an image $r_i$, an image $r_{i+1}$, and an image $r_{i+2}$, in three frames of images (an image $R_i$, an image $R_{i+1}$, and an image $R_{i+2}$) obtained by sequentially shooting display content on the display of the transmit end by the receive end.

As shown in (2) in FIG. 4a, the image $r_i$ shot by the receive end includes both a current frame, which is an image $f_i$ (a black region represented by B) herein, and a previous frame, which is an image $f_{i-1}$ (a white region represented by W) herein. In addition, a fusion region of the image $f_i$ and the image $f_{i-1}$ further exists between the black region and the white region, and is a gray region represented by G herein.

As shown in (2) in FIG. 4a, the image $r_i$ shot by the receive end includes both the image $f_{i+1}$ (a white region represented by W) and the image $f_i$ (a black region represented by B). In addition, a fusion region of the image $f_i$ and the image $f_{i+1}$ further exists between the black region and the white region, and is a gray region represented by G.

Similarly, as shown in (2) in FIG. 4a, the image $r_{i+1}$ shot by the receive end includes both the image $f_{i+2}$ (a black region represented by B) and the image $f_{i+1}$ (a white region represented by W). In addition, a fusion region of the image $f_{i+1}$ and the image $f_{i+2}$ further exists between the black region and the white region, and is a gray region represented by G.

(2) in FIG. 4a shows three frames of images that are obtained by shooting the display of the transmit end by the receive end and that are at the location q1, where each frame of image includes a fusion region between a current frame and a previous frame that are displayed by the transmit end, and the fusion region is between a black region and a white region, and extends from a lower left corner to an upper right corner.

Then, as shown in (3) in FIG. 4a, to decode the grid at the location q1 shown in (1) in FIG. 5a to obtain an image of the two-dimensional code at the location q1, the receive end may perform difference processing on the three frames of images at the location q1 that are obtained through shooting and that are shown in (2) in FIG. 4a. Specifically, the receive end may perform differential processing on the image $r_i$ and the image $r_{i+1}$ that are shown in (2) in FIG. 4a, and then calculate an absolute value, to obtain an image $|r_i-r_{i+1}|$ shown in (3) in FIG. 4a; and the receive end may perform differential processing on the image $r_i$ and the image $r_{i+2}$ that are shown in (2) in FIG. 4a, and then calculate an absolute value, to obtain an image $|r_i-r_{i+2}|$ shown in (3) in FIG. 4a.

As shown in (3) in FIG. 4a, if the image $|r_i-r_{i+2}|$ is a black region represented by B (an RGB value is 0), the receive end may binarize the image $|r_i-r_{i+2}|$ into 0.

As shown in (3) in FIG. 4a, although the image $|r_i-r_{i+1}|$ includes a white region (an RGB value is 255), a diagonal region of the image $|r_i-r_{i+1}|$ includes a black region represented by B (an RGB value is 0). In this case, the receive end cannot quantize the image $|r_i-r_{i+1}|$ corresponding to a single grid. As a result, the image $|r_i-r_{i+1}|$ cannot be binarized into 1. Consequently, in a graphic code encoding method in the related technology, a decoder cannot binarize some grids corresponding to the two-dimensional code into 1, and binarizes the grids into 0, and therefore the grids are displayed as white grids in the two-dimensional code.

Refer to FIG. 5a again. A process shown in FIG. 4a is a decoding process of the grid at the location q1 shown in (1) in FIG. 5a. When the grid at the location q1 is a black grid (a binarization result is 1) that displays the hidden two-dimensional code, because a black region exists in a differential decoding result, shown in (3) in FIG. 4a, of the grid, the grid can only be binarized into 0. As a result, the grid at the location q1 cannot be decoded.

The receive end may shoot, according to a principle of the process in FIG. 4a, the three frames of images sequentially displayed on the display of the transmit end: the image $F_i$, the image $F_{i+1}$, and the image $F_{i+2}$, to obtain the three frames of images: the image $R_i$, the image $R_{i+1}$, and the image $R_{i+2}$. As shown in (2) in FIG. 5a, the receive end may perform differential processing on the image $R_i$ and the image $R_{i+1}$, and then calculate an absolute value, to obtain a binarized image of an image $|R_i-R_{i+1}|$, where an image that is of the grid at the location q1 and that is in the image $|R_i-R_{i+1}|$ is the binarized image of the image $|r_i-r_{i+1}|$ shown in (3) in FIG. 4a. Similarly, as shown in (3) in FIG. 5a, the receive end may perform differential processing on the image $R_i$ and the image $R_{i+2}$, and then calculate an absolute value, to obtain a binarized image of an image $|R_i-R_{i+2}|$, where an image that is of the grid at the location q1 and that is in the image $|R_i-R_{i+2}|$ is the binarized image of the image $|r_i-r_{i+2}|$ shown in (3) in FIG. 4a.

It can be seen from decoding results of the receive end shown in (2) in FIG. 5a and (3) in FIG. 5a that the two-dimensional code is not obtained by restoring the image shown in (3) in FIG. 5a, the image shown in (2) in FIG. 5a also includes only a partial two-dimensional code obtained through decoding, and a part in a lower right corner cannot be decoded.

Therefore, when a solution in which an encoded graphic code is embedded in an original video or image by using a method for encoding a graphic code by a transmit end in a related technology is used, the graphic code is encoded into graphic codes of two colors, for alternate displaying in the original video or image, when the receive end shoots a video or an image displayed by the transmit end, a refresh stripe of the graphic codes of two colors that are alternately displayed may exist in a shot target image. In this case, when a region in which the refresh stripe is displayed in the shot target image belongs to a display region in which the graphic code is located, a part of the graphic code located in the display region cannot be decoded. As a result, the graphic code cannot be correctly decoded.

Therefore, for the problem in the related technology that when the refresh stripe exists in the image shot by the receive end, and the region in which the refresh stripe is located belongs to a display location of the hidden graphic code, the graphic code cannot be decoded, this application provides an encoding method, a decoding method, the transmit end, and the receive end. The transmit end may separately encode a graphic code with three or more colors (or three or more types of luminance) by using the encoding method, to obtain a plurality of frames of images (three or more frames of images), where colors of at least three frames of images in the plurality of frames of images are different, and/or luminance of the at least three frames of images in the plurality of frames of images is different. For example, two frames of images in the plurality of frames of images are encoded in terms of luminance and color, so that both luminance and colors of the two frames of images are different. The transmit end may alternately display the plurality of frames of images. Optionally, the plurality of frames of images may be used as a background element or a part of a background element in an original image or video, or may be overlaid on an upper layer of an original image or video. Alternatively, one frame of image in an original video is replaced with the plurality of frames of images. Alternatively, the plurality of frames of images are inserted before or after one frame of image in an original video. This is not limited herein.

Optionally, the transmit end may alternately display the plurality of frames of images at a frequency at which the at least three frames of images cannot be perceived by human eyes.

Optionally, the plurality of frames of images may alternately be displayed at a frequency at which the at least three frames of images can be perceived by a sensor associated with the receive end.

The graphic code may be a machine-readable code, a one-dimensional or two-dimensional information symbol, an Aztec code, a data matrix code, a QR code, a barcode, or the like.

Specifically, the graphic code may include a first region (also expressed as a first part) represented by a bit "1" and a second region (also expressed as a second part) represented by a bit "0". When encoding, the transmit end may encode at least one of the first region and the second region with three or more colors (and/or luminance), to obtain a plurality of frames of images (three or more frames of images).

For example, if the graphic code is a two-dimensional code, the two-dimensional code includes a black grid represented by a bit "1" (all black grids in the two-dimensional code are expressed as a black region below), and a white grid represented by a bit "0" (all white grids in the two-dimensional code are expressed as a white region below). In this case, the transmit end may encode the black region in the two-dimensional code with three types of luminance, and keep the white region unchanged (or encode the white region with another luminance value), to obtain three frames of images through encoding. Alternatively, the transmit end may encode the white region in the two-dimensional code with three types of luminance, and keep the black region unchanged (or encode the black region with another luminance value), to obtain three frames of images through encoding. Alternatively, the transmit end may encode the two-dimensional code to obtain three frames of images. The black region in the two-dimensional code is encoded with three types of luminance. For example, the luminance that corresponds to the black region and that is in the three frames of images is a, b, and c. In addition, the white region in the two-dimensional code is also encoded with three types of luminance. For example, the luminance that corresponds to the white region and that is in the three frames of images cannot be a, b, and c, that is, cannot be completely the same as a, b, and c, and may be a, c, and b, or a, a, and a, or c, a, and b, or the like, to ensure that, a difference result of the black region is different from that of the white region during difference processing on two frames of images, to obtain three frames of images through encoding. Two luminance changes of the black region cannot be completely the same as two luminance changes of the white region, to avoid a case in which the receive end cannot distinguish between the black region and the white region based on this difference when performing difference processing on the two frames of shot images.

In this case, after the receive end shoots the display image of the transmit end to obtain the at least three frames of images (with different colors and/or luminance), because the graphic code is encoded into the at least three frames of images, and at least one target region in the black region (an example of the first region represented by the bit 1) and the white region (an example of the first region represented by the bit 0) has different luminance or colors in the three frames of images, pixel values corresponding to a same pixel location (corresponding to the target region, for example, the black region) are different in the at least three frames of images shot by the receive end (reflected as different colors and/or luminance). Therefore, after the receive end performs differential processing on two frames of images obtained through shooting, an RGB value of the target region after differential processing is not 0, and the target region is not a black region shown in (3) in FIG. 4a. However, in an image obtained through differential (also expressed as difference) processing, even if a differential result of a region (for example, the white region) other than the target region is 0, a differential result of the target region (for example, the black region) is greater than 0. In this way, the white region and the black region in the image obtained through differential processing can be distinguished, and the receive end can binarize the image obtained through differential processing.

In the related technology, the transmit end alternately displays two frames of images. In this case, when the receive end shoots the two frames of images alternately displayed by the transmit end, two frames of images obtained through shooting are two consecutive frames of images, and locations, luminance, and colors of refresh stripes in the two consecutive frames of images basically remain unchanged, or are very close. In this case, after the receive end performs difference processing on the two consecutive frames of images obtained through shooting, the black region shown in (3) in FIG. 4a may exist at the location of the refresh stripe.

However, in the technical solution of this application, the transmit end alternately displays at least three frames of images. In this case, when the receive end shoots the at least three frames of images alternately displayed by the transmit end, the receive end may obtain at least three frames of images through shooting, instead of two consecutive frames of images. In this way, between the at least three frames of images obtained by the receive end through shooting (for example, inconsecutive frames such as a first shot frame and a third shot frame, a second shot frame and a fourth shot frame, or a second shot frame and a fifth shot frame), one of luminance and a color of a refresh stripe may change. In this way, when the receive end performs difference (for example, a difference in a luminance domain or a color domain) processing on at least one group of two frames of images in the at least three frames of images obtained through shooting, a difference result is not 0, and no black region exists in a region, in which a refresh stripe is located, in an image obtained through difference processing. The region in which the refresh stripe is located can be quantized, so that even if the refresh stripe exists in the shot image, correct decoding of the graphic code by the receive end is not affected.

In this way, the transmit end cyclically and sequentially displays the at least three frames of images to represent the bit 1 (or the bit 0) in the graphic code, so as to implement hidden displaying of the graphic code in a human-eye-imperceptible manner. The at least three frames of images may be patterns of three colors or patterns of three types of luminance. The pattern may be a pattern of consecutive blocks (for example, a two-dimensional code), or may be a pattern of discrete dots (for example, an annular code including discrete dots). The pattern in the graphic code is not limited in this application.

In this case, when there is a refresh stripe region in the image obtained through shooting by the receive end, even if a location of the refresh stripe belongs to a display location of the graphic code, in a result obtained after the receive end performs difference processing on images obtained through shooting, a difference is not 0 at a location corresponding to the refresh stripe region, so that the refresh stripe region is not a black region, and the receive end can correctly obtain the graphic code through decoding, to obtain the carried target information from the graphic code. In this way, in this application, impact of the refresh stripe (indicating a fusion region of two frames of images) on differential decoding of the hidden graphic code can be eliminated, and even if the graphic code is covered by the refresh stripe, decoding can be correctly performed.

An application scenario of this application may be a code scanning scenario in which a graphic code that is not perceived by human eyes is displayed on a screen of a light emitting array. For example, the human eyes can see a dynamic image on the screen, but cannot perceive the graphic code. In other words, in this application, the plurality of frames of images obtained through encoding are imperceptible to the human eyes when being alternately displayed. However, when the plurality of frames of images obtained through encoding are alternately displayed, the plurality of frames of encoded images are visible or perceptible to a sensor associated with the receive end that is receiving information or that is to be paired with the transmit end.

For example, the graphic code is a two-dimensional code. The application scenario of this application may be as follows: The transmit end alternately displays the at least three frames of images generated by encoding the graphic code, to perform pairing between the transmit end and the receive end, and the receive end scans or shots display content on a display of the transmit end, to obtain the graphic code through decoding, so as to extract target information in the graphic code.

The transmit end may be any electronic device including a display, and the receive end may be any electronic device including a camera. A type of the electronic device may include but is not limited to a mobile phone, a tablet computer, a personal computer, a notebook computer, a wearable device (for example, a smartwatch, a smart band, or smart glasses), a vehicle-mounted device (for example, a vehicle-mounted display), or a smart television.

For example, the application scenario of this application may specifically include: A mobile phone scans a screen of another mobile phone, a mobile phone scans a screen of a tablet computer, a mobile phone scans a screen of a personal computer (PC), a mobile phone scans a screen of a smartwatch, a tablet computer scans a screen of a mobile phone, a tablet computer scans a screen of another tablet computer, a tablet computer scans a screen of a PC, a tablet computer scans a screen of a smartwatch, or the like.

The following describes a processing process of a transmit end and a processing process of a receive end in this application with reference to specific embodiments.

The following separately describes a processing process of a transmit end in this application by using Example 1 to Example 4 as examples.

Example 1

In Example 1, the transmit end may encode a two-dimensional code into three frames of images, and load the three frames of images into an original video, to hide the two-dimensional code in the original video for displaying.

The original video may be any video. In addition, the original video may be replaced with a static or dynamic image. This is not limited herein.

In Example 1, a to-be-encoded graphic code is a two-dimensional code. When the graphic code is a graphic code of another pattern (for example, a barcode or an annular code), a method is similar, and details are not described herein. A pattern inside the barcode is in a vertical bar shape, and a pattern inside the annular code is in a dot shape. Sizes of dots inside the annular code may be the same or different. This is not limited herein.

In some embodiments, a pattern in the original video may be the same as the pattern in the graphic code, so that the graphic code can be hidden in the original video and is not easily seen by human eyes.

For example, in Example 1, the pattern in the original video is a grid pattern, and has a same pattern structure as a grid in the two-dimensional code.

In example 1, resolution, a quantity of grids, and a location of a grid of each frame of image in the original video are the same as resolution, a quantity of code blocks (also grid patterns), and a location of a code block of the to-be-encoded two-dimensional code.

In Example 1, the original video is also expressed as a random checkerboard slow-motion video.

In Example 1, the to-be-encoded two-dimensional code is a two-dimensional code with resolution of $21 \times 21$. Each unit pattern is a square (which is also expressed as a grid). The original video is a video with resolution of $21 \times 21$, and a unit pattern of the original video is also a grid of a same size (a color includes black and white). The original video includes a plurality of frames of images in which the grid dynamically changes.

In Example 1, the original video is the random checkerboard slow-motion video, and a unit pattern and resolution of the original video are the same as those of the to-be-encoded two-dimensional code. In this case, the transmit end may encode the two-dimensional code based on the original video, to obtain at least one frame of image (as at least one frame of image in the three frames of images).

In another embodiment, the unit pattern of the original video may alternatively not be a grid, and may be a pattern such as a star pattern, a circular pattern, a random point, or a point. This is not limited herein.

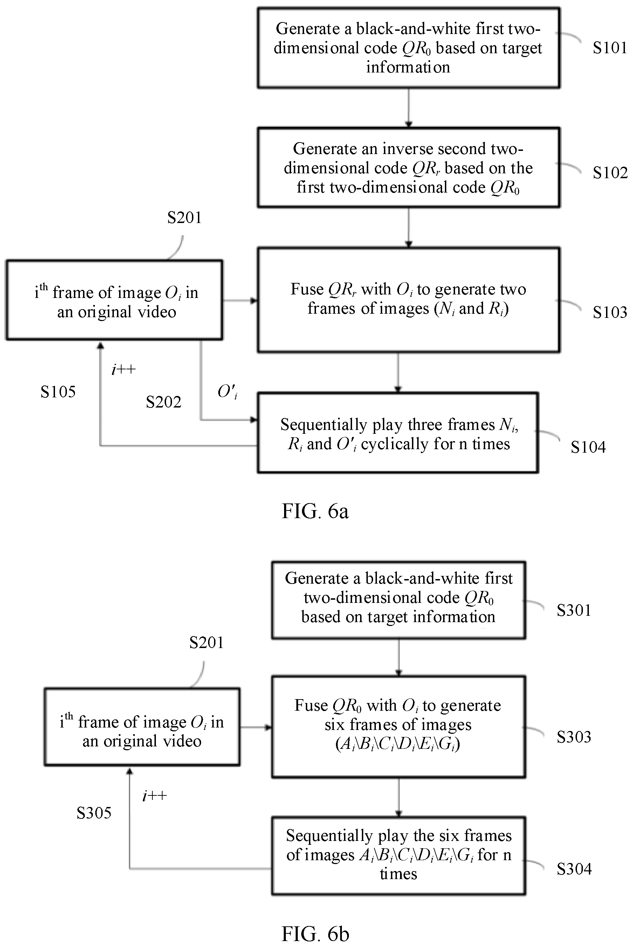

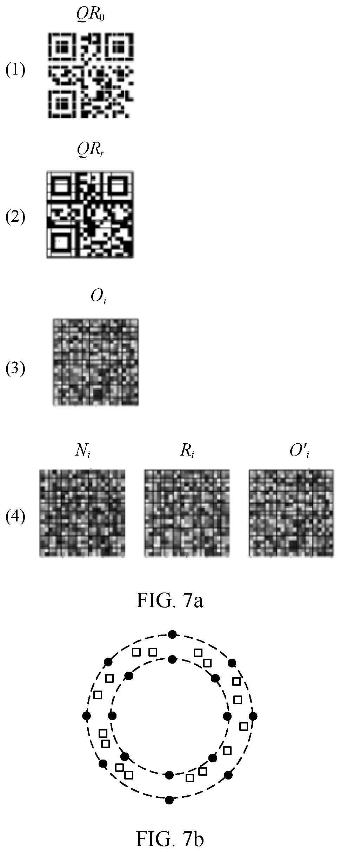

FIG. 6a is a diagram of a processing process of the transmit end in Example 1, and FIG. 7a shows images related to Example 1.

Refer to FIG. 6a. The process may include the following steps.

S101: The transmit end generates a black-and-white first two-dimensional code $QR_0$ based on target information.

The first two-dimensional code $QR_0$ is also expressed as a black-and-white two-dimensional code $QR_0$.

The target information is information, for example, a link or an account password, that needs to be carried in a two-dimensional code. This is not limited herein.

For example, the transmit end may perform two-dimensional code encoding on text "Hello World" to obtain a black-and-white two-dimensional code shown in (1) in FIG. 7a, namely, the first two-dimensional code $QR_0$.

Optionally, in S102, the transmit end generates an inverse second two-dimensional code $QR_r$ based on the first two-dimensional code $QR_0$.

The transmit end may generate an inverse two-dimensional code $QR_r$ (also expressed as a second two-dimensional code $QR_r$) based on the black-and-white two-dimensional code $QR_0$, where an RGB value of a black grid in the black-and-white two-dimensional code is [0, 0, 0], and an RGB value of a white grid in the black-and-white two-dimensional code is [255, 255, 255].

In this case, the transmit end may change an RGB value (represented by [R, G, B]) of a black region (all black grids) in the black-and-white two-dimensional code $QR_0$ to [255, 255, 255], and change an RGB value of a white region (all white grids) in the black-and-white two-dimensional code $QR_0$ to [0, 0, 0], to change the black grids in the black-and-white two-dimensional code $QR_0$ to white grids, and to change the white grids to black grids, so as to obtain the inverse two-dimensional code $QR_r$ as shown in (2) in FIG. 7a. In this way, when the first two-dimensional code is encoded, an encoding scheme originally used for the black region may be applied to a white region in the inverse two-dimensional code $QR_r$ (or referred to as an image $QR_r$), to implement exchange of encoding schemes for the white region and the black region.

In the black-and-white two-dimensional code, the black grid represents a bit 1, and the white grid represents a bit 0. In the inverse two-dimensional code, the white grid represents a bit 1, and the black grid represents a bit 0.

In some embodiments, when the transmit end processes the first two-dimensional code to obtain the second two-dimensional code, the processing is not limited to color inversion processing, and may also be changing luminance (or colors) of the black grid and the white grid in the first two-dimensional code. For example, the RGB value of the black grid in the first two-dimensional code is adjusted to [20, 20, 20], and the RGB value of the white grid in the first two-dimensional code is adjusted to [200, 200, 200], to obtain the second two-dimensional code.

S201: The transmit end extracts one frame of image from the original video, for example, extracts an i$^{th}$ frame of image, which is represented by $O_i$.

(3) in FIG. 7a shows the image $O_i$ extracted from the original video (which is a random chessboard slow-motion video herein).

A sequence of performing S201 and S101 is not limited in this application, and S201 and S101 may be performed in parallel or in series.

After S201 and S102, the transmit end may perform S103.

In this embodiment, luminance encoding may be performed on the black-and-white two-dimensional code, to obtain three frames of images with different luminance: an image $N_i$, an image $R_i$, and an image $O_i'$. The encoding process may include S103 and S202.

S103: The transmit end fuses the second two-dimensional code $QR_r$ with the i$^{th}$ frame of image $O_i$ to generate two frames of images: the image $N_i$ and the image $R_i$.

After S201, optionally, in S202, the transmit end may perform gain adjustment on the i$^{th}$ frame of image $O_i$ in the original video, to obtain the image $O_i'$.

Refer to Table 1. The transmit end may encode a white part in the image $QR_r$ according to Formula 1, where an encoding result (an RGB value) of the white part in the image $QR_r$ is a shown in Table 1, to obtain the image $N_i$ shown in (4) in FIG. 7a.

The transmit end encodes the white part in the image $QR_r$ according to Formula 2, to obtain b shown in Table 1, so as to obtain the image $R_i$ shown in (4) in FIG. 7a.

The transmit end encodes a white part in the image $O_i$ according to Formula 3, to obtain c shown in Table 1, so as to obtain the image $O_i'$ shown in (4) in FIG. 7a.

When the transmit end obtains the image $N_i$, the image $R_i$, and the image $O_i'$ through encoding, a scheme of encoding black parts in the corresponding images is not limited. For example, the black parts may be uniformly encoded with same luminance d in the foregoing three frames of images (the image $N_i$, the image $R_i$, and the image $O_i'$), or may be encoded into a pixel value that is in the image $O_i$ and that corresponds to the black part in the corresponding image $QR_r$, or the like. This is not limited herein. Table 1 shows a possible image $N_i$, image $R_i$, and image $O_i'$.

Table 1

|  | Image $N_i$ | Image $R_i$ | Image $O_i'$ |
|---|---|---|---|
| White part | a | b | c |
| Black part | d | d | d |

$$a = O_i + g1 * QR_r \quad \text{Formula (1)}$$

$$b = O_i - g2 * QR_r \quad \text{Formula (2)}$$

$$c = g3 * O_i \quad \text{Formula (3)}$$

Herein, g1 and g2 in Formula 1 and Formula 2 are gain values used when gain adjustment is performed on an RGB value of a white region (each white pixel) in the image $QR_r$, and g3 in Formula 3 is a gain value used when gain adjustment is performed on an RGB value of a white region in the image $O_i$.

When gain adjustment is performed on three channels R, G, and B of the image $QR_r$ according to Formula 1, a same gain value (that is, $g1$) is used for adjustment, to change luminance (or a grayscale) of the image $QR_r$. Similarly, same gain (which is g2 herein) adjustment may also be performed on the three channels R, G, and B of the image $QR_r$ according to Formula 2, to change luminance of the image $QR_r$. Same gain (which is g3 herein) adjustment may also be performed on three channels R, G, and B of the image $O_i$ according to Formula 3, to change luminance of the image $O_i$.

In some embodiments, when encoding the black-and-white two-dimensional code $QR_0$ to obtain the three frames of images, the transmit end may also adjust different gains for the three channels R, G, and B of the image $QR_r$, to obtain the three frames of images with different colors about the black part and/or the white part in the black-and-white two-dimensional code $QR_0$: the image $N_i$, the image $R_i$, and the image $O'_i$ .

Herein, $g1$, $g2$, and $g3$ are preset gain values. Due to the preset gain values, there may be an obvious difference between differential results of any two frames of images in the image $N_i$, the image $R_i$, and the image $O'_i$ that are obtained through fusion, so that the receive end can obtain the black-and-white two-dimensional code $QR_0$ through decoding based on the differential results.

The image $N_i$, the image $R_i$, and the image $O'_i$ are the three frames of images with different luminance (or grayscales) obtained by encoding the black-and-white two-dimensional code $QR_0$.

In this embodiment, the three frames of images obtained by encoding the black-and-white two-dimensional code $QR_0$ are the image $N_i$, the image $R_i$, and the image $O'_i$ respectively, and parts that are in the three frames of images and that correspond to the white region in the inverse two-dimensional code $QR_r$ are encoded with three types of luminance through gain adjustment, for example, a, b, and c in Table 1 and Formula 1 to Formula 3. Optionally, parts that are in the three frames of images and that correspond to the black region in the inverse two-dimensional code $QR_r$ are encoded with luminance d.

Examples are listed below for description:

In a first example, for example, if a grayscale value (that is, a luminance value) of the image $O_i$ is 127, g1=g2=0.5, and g3=1.

Because the image $O_i$ is a black-and-white image, grayscale values of the three channels R, G, and B are the same, and are an average value of values of the three channels R, G, and B. Therefore, a grayscale value of the image $O_i$ is an average value of RGB values of all pixels of the image $O_i$.

In the image $QR_r$, an RGB value of the white region is [255, 255, 255], and an RGB value of the black region is [0, 0, 0]. Therefore, a grayscale value of each white pixel is 255, and a grayscale value of each black pixel is 0.

$a$ = 127 + 0.5 * 255 = 255 may be obtained through calculation according to Formula 1.

$b$ = 127 - 0.5 * 255 = 0 may be obtained through calculation according to Formula 2.

c = 1 * 127 = 127 may be obtained through calculation according to Formula 3.

In this case, the transmit end may encode the black region (corresponding to the white region in the inverse two-dimensional code $QR_r$) in the black-and-white two-dimensional code $QR_0$ to obtain the three frames of images: the image $N_i$, the image $R_i$, and the image $O'_i$ . A grayscale value of a pixel that is in the image $N_i$ and that corresponds to the white region in the inverse two-dimensional code $QR_r$ is a=255, for example, an RGB value is [255, 255, 255]. A grayscale value of a pixel that is in the image $R_i$ and that corresponds to the white region in the inverse two-dimensional code $QR_r$ is b=0, for example, an RGB value is [0, 0, 0]. A grayscale value of a pixel that is in the image $O'_i$ and that corresponds to the white region in the inverse two-dimensional code $QR_r$ is c=127, for example, an RGB value is [127, 127, 127].

A grayscale value of a pixel that corresponds to the black region in the inverse two-dimensional code $QR_r$ and that is in each of the image $N_i$, image $R_i$, and image $O'_i$ is d, for example, d=127. For example, an RGB value is [127, 127, 127].

Similarly, in a second example, for example, if a grayscale value (that is, a luminance value) of the image $O_i$ is 127, g1=g2=0.5, and g3=2; and for example, if d=127, a=255, b=0, and c=255. In this case, RGB values of pixels that are in the image $N_i$, the image $R_i$, and the image $O'_i$ and that correspond to the white region in the inverse color two-dimensional code $QR_r$ are sequentially [255, 255, 255], [0, 0, 0], and [255, 255, 255]. RGB values of pixels that are in the image $N_i$, the image $R_i$, and the image $O'_i$ and that correspond to the black region in the inverse two-dimensional code $QR_r$ are all [127, 127, 127].

In some embodiments, g1 and g2 may alternatively be different.

In Example 1, because resolution, a unit pattern, and a quantity of patterns of the original video are the same as corresponding parameters of the black-and-white two-dimensional code $QR_0$, the transmit end may perform gain adjustment on the frame of image $O_i$ in the original video to change the luminance of the image $O_i$, so as to obtain the image $O'_i$ as a two-dimensional code obtained through luminance adjustment of the black-and-white two-dimensional code. The image $O'_i$ may also be used as a frame of image obtained through luminance adjustment of the black-and-white two-dimensional code $QR_0$.

In another embodiment, the transmit end may alternatively directly use the image $O_i$ as a frame of image obtained by encoding the black-and-white two-dimensional code $QR_0$. In other words, obtained three frames of images may be the image $N_i$, the image $R_i$, and the image $O_i$.

After S202 and S103, the transmit end may perform S104.

S104: The transmit end may replace the $i^{th}$ frame of image $O_i$ in the original video with the image $N_i$, the image $R_i$, and the image $O_i'$, and sequentially play the three frames of images cyclically for n times in the original video.

Herein, n is a positive integer.

For example, if a frame rate of the original video is 60 FPS, for example, n=1, one frame of image (the $i^{th}$ frame) in the original video is replaced with three frames of images (the image $N_i$, the image $R_i$, and the image $O_i'$), so that a visual frame rate of the processed video is 20 FPS. This is similar to that the frame of image (the $i^{th}$ frame) in the original video is similarly played for three times; and is similar to slow-motion effect.

When n is greater than 1, for example, n=2, the transmit end may sequentially play the image $N_i$, the image $R_i$, and the image $O_i'$ once, and then cyclically play the three frames of images once in a sequence of the image $N_i$, the image $R_i$, and the image $O_i'$.

In some embodiments, when cyclically playing the image $N_i$, the image $R_i$, and the image $O_i'$, the transmit end may alternatively play the images in different sequences in all cycles.

S105: The transmit end cyclically performs S103, S202, and S104 based on a next frame of image in the original video, to update, based on the next frame of image, the three frames of images obtained by encoding the black-and-white two-dimensional code $QR_0$. This process is repeated until a last frame of image in the original video.

Table 1 provides possible encoding results, corresponding to the white part and the black part in the image $QR_r$, in the three frames of images (the image $N_i$, the image $R_i$, and the image $O_i'$). Corresponding to the white part in the image $QR_r$, the three frames of images may be sequentially played with three types of luminance a, b, and c in a time sequence, and corresponding to the black part in the image $QR_r$, the three frames of images may be synchronously played with one type of luminance d, d, and d in a time sequence.

In some embodiments, an average value of a largest value and a smallest value in a, b, and c in Table 1 and Formula 1 to Formula 3 is equal to an intermediate value (that is, a value that is neither a largest value nor a smallest value) in a, b, and c. In this way, a luminance difference between the image $N_i$, the image $R_i$, and the image $O_i'$ that are played by the transmit end is relatively small for the white part in the image $QR_r$, so that luminance changes of the white part in the image $N_i$, the image $R_i$, and the image $O_i'$ that are sequentially played is relatively smooth, the luminance change is not obvious, and the hidden two-dimensional code is not easily identified by a user from the played video.

In some embodiments, when a, b, and c in Table 1 represent same luminance, but represent different colors, similarly, one color in a, b, and c is an average value of the other two colors. In this way, color changes that are of the white part, and that are in the image $N_i$, the image $R_i$, and the image $O_i'$ that are played by the transmit end are relatively close to each other, for example, from red to orange, and then from orange to yellow. There is no sudden color change, for example, a sudden change from red to black.

In some embodiments, when a, b, and c in Table 1 represent same luminance, but represent different colors, an average value of colors in a, b, and c may be close to a color of the corresponding $i^{th}$ frame in the original video (for example, a difference between RGB values is less than a threshold). In this way, a two-dimensional code image that is obtained through encoding (that is, the image $N_i$, the image $R_i$, and the image $O_i'$) and that has a color change is not easily seen by naked eyes when being displayed in the original video, to avoid exposure of the hidden two-dimensional code. For example, a color of the $i^{th}$ frame of image is yellow, where a may represent red, b may represent green, and c may represent yellow. In this way, red and green alternately blink yellow, and the three frames of images alternately display yellow, which is the same as a color of the $i^{th}$ frame of image into which the two-dimensional code is overlaid or fused, so that the two-dimensional code image is not easily found by the user.

In some embodiments, when three frames of images are generated by encoding the black-and-white two-dimensional code, a manner is not limited to fusing the black-and-white two-dimensional code into the $i^{th}$ frame of image in the original video, and gain adjustment may also be performed on only the black part and/or the white part in the black-and-white two-dimensional code, to obtain the three frames of images. The three frames of images have three types of luminance for the black part, and/or have three types of luminance for the white part.

In some embodiments, the transmit end not only fuses the black-and-white two-dimensional code into the $i^{th}$ frame of image in the original video to obtain the three frames of images obtained through encoding, but also may use the generated three frames of encoded images as an upper layer, and use corresponding three frames of images in the original video as a lower layer, to display, on the layer of the original video in a layer composition manner, the three frames of images (the image $N_i$, the image $R_i$, and the image $O_i'$) obtained through encoding. In this way, a frame rate of the original video does not need to be changed.

According to the solution in Example 1 of the transmit end, the luminance (or color) of the black grid in the black-and-white two-dimensional code is encoded into three frames of images (the image $N_i$, the image $R_i$, and the image $O'_i$) with different luminance (or colors) by properly setting the gain value and combining a video frame of the original video, and one frame of image can be added on the basis of a dual-frame differential video, so that the luminance or colors of the grids in the three frames of images are controlled based on the video frame of the original video, the black-and-white two-dimensional code, and the gain parameter. When the three frames of images obtained through encoding are displayed in the original video, a processed video still looks like the original video to naked eyes (for example, a processed random checkerboard slow-motion video still looks like the random checkerboard slow-motion video). For example, video effect is that a black-and-white grid similar to a checkerboard changes in luminance or color, to present blinking effect. However, after the receive end shoots the processed video displayed by the transmit end, because the three frames of images have different colors or luminance of the black region in the black-and-white two-dimensional code, there is no completely same (same in luminance and color) pattern at same locations in the plurality of frames of images shot by the receive end. Therefore, even if the two-dimensional code is covered by a refresh stripe of any two frames of images (representing a fusion region of the two frames of images) in the three frames of images, the receive end may distinguish between the black region and the white region in the two-dimensional code in a differential manner, to obtain the two-dimensional code through correct decoding, and extract the target information in the black-and-white two-dimensional code.

In some embodiments, the black-and-white two-dimensional code in Example 1 may alternatively be an annular code.

FIG. 7b shows an example of an annular code in this application. Two dashed circles in the annular code shown in FIG. 7b do not exist in the annular code, and are merely used herein for description that layout of black dots is two circles shown by dashed lines, to form the annular code. As shown in FIG. 7b, the black circles may be timing patterns (a function of the timing pattern is the same as a function of a timing pattern of the two-dimensional code); squares between the black circles represent a bit 1, to carry the target information; and no square is shown in another region in a ring formed by the two dashed circles, to represent a bit 0.

When encoding the annular code shown in FIG. 7b, the transmit end may separately encode a square region (all the squares shown in FIG. 7b) that is shown in the annular code and that represents the bit 1 into three colors through gain adjustment, to obtain three frames of images obtained by encoding the annular code, where colors of the squares representing the bit 1 are different between the three frames of images (for example, an image 1, an image 2, and an image 3).

The transmit end does not process a pattern representing the bit 0 in the annular code shown in FIG. 7b (that is, another square that is not shown and that is between the annular timing patterns), so that the pattern representing the bit 0 remains unchanged in the foregoing three frames of images.

Optionally, an average color of the colors of the three frames of images obtained by encoding the annular code shown in FIG. 7b by the transmit end may be close to a color of a pattern (for example, a dot or a square) in a video frame in the original video, so that it is difficult for naked eyes to find the annular code from a video carrying the annular code.

The transmit end may overlay the three frames of images on an upper layer of the three frames of images of the original video in a layer overlay manner in a sequence of the image 1, the image 2, and the image 3, without changing a frame rate of the original video. In the processed video, the foregoing three frames of images may be overlaid on the original video, and the three frames of images are cyclically played in the foregoing sequence.

In some embodiments, the original video may alternatively be a ring-like video that dynamically changes. The original video may include a dot or a square, and colors of the dot and the square may change. Sizes of the dot and the square in the annular code may be related to sizes of the dot and the square in the original video (for example, the size is the same as or less than a size of a corresponding pattern in the original video), so that the annular code cannot be identified by naked eyes in the played video.

In some embodiments, when the three frames of images are overlaid on the original video, storage locations of patterns (for example, the black dots and squares shown in FIG. 7b) in the three frames of images may remain unchanged, or may move clockwise or counterclockwise along a direction of the dashed circle. However, during movement, a relative location between the patterns in the annular code remain unchanged.

Example 2

Implementation processes of Example 2 and Example 1 are mostly the same. A difference lies in that, in Example 2, when a black-and-white two-dimensional code is encoded, not only a region representing a bit 1 (corresponding to a black region in the black-and-white two-dimensional code, and also corresponding to a white region in an inverse two-dimensional code) may be encoded with different luminance, but also a region representing a bit 0 (corresponding to a white region in the black-and-white two-dimensional code, and also corresponding to a black region in the inverse two-dimensional code) may be encoded with different luminance. In addition, more than three frames of images may be obtained through encoding. In Example 2, six frames of images may be obtained through encoding, and are represented by $A_i$, $B_i$, $C_i$, $D_i$, $E_i$, and $G_i$ respectively.

FIG. 6b is a diagram of a processing process of a transmit end in Example 2.

Refer to FIG. 6b. The process may include the following steps.

S301: The transmit end generates a black-and-white first two-dimensional code $QR_0$ based on target information.

An implementation principle of S301 is the same as an implementation principle of S101 shown in FIG. 6b in Example 1. Details are not described herein again.

S201: The transmit end extracts one frame of image from the original video, for example, extracts an $i^{th}$ frame of image, which is represented by $O_i$.

An implementation principle of S201 is the same as an implementation principle of S201 shown in FIG. 6b in Example 1. Details are not described herein again.

After S201 and S301, in S303, the transmit end fuses the first two-dimensional code $QR_0$ and the $i^{th}$ frame of image $O_i$ to generate six frames of images: an image $A_i$, an image $B_i$, an image $C_i$, an image $D_i$, an image $E_i$, and an image $G_i$.

Table 2 shows an example of a possible encoding result of the six frames of images.

Table 2

|  | Image $A_i$ | Image $B_i$ | Image $C_i$ | Image $D_i$ | Image $E_i$ | Image $G_i$ |
|---|---|---|---|---|---|---|
| White part | a | b | c | a | b | c |
| Black part | d | d | e | e | f | f |

The "white part" in Table 2 indicates all white grids in the to-be-encoded black-and-white two-dimensional code $QR_0$, namely, all grids represented by a bit 0. The "black part" in Table 2 indicates all black grids in the to-be-encoded black-and-white two-dimensional code $QR_0$, namely, all grids represented by a bit 1. In Table 2, values (for example, a, b, and c) of the white part in the six frames of images represent luminance values (or RGB values, where values of three channels R, G, and B are the same and are the luminance values) of the white part in the corresponding six frames of images. Similarly, in Table 2, values (for example, d, e, and f) of the white part in the six frames of images represent luminance values (or RGB values, where values of three channels R, G, and B are the same and are the luminance values) of the black part in the corresponding six frames of images.

In the first two-dimensional code $QR_0$, if an RGB value of a black region is 0, it is inconvenient to perform gain processing. Therefore, when performing S303 (S103 in Example 1 is similar), the transmit end may adjust the RGB value of the black region in the first two-dimensional code $QR_0$ to a non-zero value $QR_b$, where $1 \leq QR_b \leq 255$. In Example 2 to Example 4, the transmit end may adjust the RGB value of the black region in the first two-dimensional code $QR_0$ to a user-defined value $QR_b$, which is 255 herein, to facilitate encoding of the black region.

The following describes generation manners of the image $A_i$, the image $B_i$, the image $C_i$, the image $D_i$, the image $E_i$, and the image $G_i$ in Table 2 with reference to Manner 1.1 to Manner 1.6.

Manner 1.1: The generation manner of the image $A_i$ is as follows: An output signal of the white part is a, and an output signal of the black part is d.

Herein, a=$O_i$+ga*$QR_0$, d=$O_i$+gd*$QR_b$, and ga and gd are gains corresponding to the white part and the black part during generation of the image $A_i$. Calculation principles are similar to those of Formula 1 and Formula 2 in Example 1.

a is a pixel value that is in the image $A_i$ and that corresponds to a location of a white pixel in the black-and-white two-dimensional code $QR_0$. d is a pixel value that is in the image $A_i$ and that corresponds to a location of a black pixel in the black-and-white two-dimensional code $QR_0$.

The image $O_i$ may be an image other than an all-black image or an all-white image. To be specific, RGB values of all pixels in the image $O_i$ cannot be all [0, 0, 0], and cannot be all [255, 255, 255].

Manner 1.2: Similarly, the generation manner of the image $B_i$ is as follows: An output signal of the white part is b, and an output signal of the black part is d, where b=$O_i$+gb*$QR_0$, d=$O_i$+gd*$QR_b$, and gb and gd are gains corresponding to the white part and the black part during generation of the image $B_i$.

Manner 1.3: The generation manner of the image $C_i$ is as follows: An output signal of the white part is c, and an output signal of the black part is e, where c=$O_i$+gc*$QR_0$, e=$O_i$+ge*$QR_b$, and gc and ge are gains corresponding to the white part and the black part during generation of a Ci frame.

Manner 1.4: The generation manner of the image $D_i$ is as follows: An output signal of the white part is a, and an output signal of the black part is e, where a=$O_i$+ga*$QR_0$, e=$O_i$+ge*$QR_b$, and ga and ge are gains corresponding to the white part and the black part during generation of the image $D_i$.

Manner 1.5: The generation manner of the image $E_i$ is as follows: An output signal of the white part is b, and an output signal of the black part f, where b=$O_i$+gb*$QR_0$, f=$O_i$+gf*$QR_b$, and gb and gf are gains corresponding to the white part and the black part during generation of the image $E_i$.

Manner 1.6: The generation manner of the image $G_i$ is as follows: An output signal of the white part is c, and an output signal of the black part is f, where c=$O_i$+gc*$QR_0$, f=$O_i$+gf*$QR_b$, and gc and gf are gains corresponding to the white part and the black part during generation of the image $G_i$.

In this embodiment, the image is encoded in a luminance domain, so that luminance of white regions and black regions in the six frames of generated images changes. In another embodiment, the image may be encoded in a color domain.

With reference to Manner 1.1 to Manner 1.6, the following provides an example of encoding in the luminance domain in the manner in Table 2.

A grayscale value (namely, a luminance value) of the white region (also expressed as a white part) in the to-be-encoded black-and-white two-dimensional code $QR_0$ is an average value of RGB values of all pixels, and is 255 herein. Similarly, an adjusted grayscale value of the black region (also expressed as a black part) in the black-and-white two-dimensional code $QR_0$ is $QR_b$, and is 255 herein. For example, a grayscale value of the image $O_i$ is 127.

The following provides an encoding example.

It is assumed that ga=0.5, gb=0, gc=-0.5, gd=0.5, ge=0, and gf=-0.5. The transmit end may obtain a= $O_i$+ga* $QR_0$ =255, b= $O_i$+gb* $QR_0$ =127, c= $O_i$+gc* $QR_0$ =0, d= $O_i$+gd* $QR_b$ =255, e= $O_i$ +ge* $QR_b$ =127, and f=$O_i$+gf*$QR_b$=0 through calculation according to the formulas in Manner 1.1 to Manner 1.6. With reference to Table 2, Table 3 provides specific grayscale values that correspond to the white part and the black part and that are in the six frames of images obtained through encoding in this application.

Table 3

|  | Image $A_i$ | Image $B_i$ | Image $C_i$ | Image $D_i$ | Image $E_i$ | Image $G_i$ |
|---|---|---|---|---|---|---|
| White part | 255 | 127 | 0 | 255 | 127 | 0 |
| Black part | 255 | 255 | 127 | 127 | 0 | 0 |

It should be understood that gain values of ga, gb, gc, gd, ge, and gf are independent of each other.

In some embodiments, when gain adjustment is performed on the white region in the black-and-white two-dimensional code, an average value of the three gains ga, gb, and gc is 0, as shown in Table 3. In this way, luminance changes of the white region between the image $A_i$, the image $B_i$, and the image $C_i$ are uniform, and are all 127; and luminance changes of the white region between the image $D_i$, the image $E_i$, and the image $G_i$ are uniform, and are all 127.

In addition, when the transmit end performs gain adjustment on the black region in the black-and-white two-dimensional code, an average value of the three gains gd, ge, and gf may be 0, as shown in Table 3. In this way, luminance changes of the black regions between each group of two frames of images in the image $A_i$, the image $B_i$, the image $C_i$, the image $D_i$, the image $E_i$, and the image $G_i$ are uniform. For example, one group of images is the image $A_i$ and the image $B_i$, another group of images is the image $C_i$ and the image $D_i$, and a luminance change between the two groups of images is 128; and one group of images is the image $C_i$ and the image $D_i$, and another group of images is the image $E_i$ and the image $G_i$, and a luminance change between the two groups of images is 127. The luminance value 128 is close to the luminance value 127, to implement the uniform luminance change of the black region.

In addition, in the six frames of images, luminance changes of the black regions and the white regions are also the same, and are close to 127.

Certainly, refer to Table 3. A luminance change of the white part between two adjacent frames of images is not necessarily the same as 127, and there may also be a difference, provided that a luminance difference of the white part between two adjacent frames of images in the six frames of images is not extremely large. For example, a luminance value of the corresponding white part in the image $B_i$ in Table 3 may alternatively be 125. An encoding rule of the corresponding black region in the foregoing six frames of images is similar, and there is no limitation to that all luminance differences are 127.

In some embodiments, similar to Table 2 and related descriptions, the six frames of images generated by the transmit end may alternatively be encoding results shown in Table 4 to Table 9a.

Table 4 shows an example of a possible encoding result of the six frames of images obtained through encoding in FIG. 6b.

Table 4

|  | Image $A_i$ | Image $B_i$ | Image $C_i$ | Image $D_i$ | Image $E_i$ | Image $G_i$ |
|---|---|---|---|---|---|---|
| White part | a | b | c | a | b | c |
| Black part | d | d | f | f | e | e |

Table 5 shows an example of a possible encoding result of the six frames of images obtained through encoding in FIG. 6b.

Table 5

|  | Image $A_i$ | Image $B_i$ | Image $C_i$ | Image $D_i$ | Image $E_i$ | Image $G_i$ |
|---|---|---|---|---|---|---|
| White part | a | b | c | a | b | c |
| Black part | e | e | d | d | f | f |

Table 6 shows an example of a possible encoding result of the six frames of images obtained through encoding in FIG. 6b.

Table 6

|  | Image $A_i$ | Image $B_i$ | Image $C_i$ | Image $D_i$ | Image $E_i$ | Image $G_i$ |
|---|---|---|---|---|---|---|
| White part | a | b | c | a | b | c |
| Black part | e | e | f | f | d | d |

Table 7 shows an example of a possible encoding result of the six frames of images obtained through encoding in FIG. 6b.

Table 7

|  | Image $A_i$ | Image $B_i$ | Image $C_i$ | Image $D_i$ | Image $E_i$ | Image $G_i$ |
|---|---|---|---|---|---|---|
| White part | a | b | c | a | b | c |
| Black part | f | f | d | d | e | e |

Table 8 shows an example of a possible encoding result of the six frames of images obtained through encoding in FIG. 6b.

Table 8

|  | Image $A_i$ | Image $B_i$ | Image $C_i$ | Image $D_i$ | Image $E_i$ | Image $G_i$ |
|---|---|---|---|---|---|---|
| White part | a | b | c | a | b | c |
| Black part | d | d | e | e | d | d |

Table 9a shows an example of a possible encoding result of the six frames of images obtained through encoding in FIG. 6b.

Table 9a

|  | Image $A_i$ | Image $B_i$ | Image $C_i$ | Image $D_i$ | Image $E_i$ | Image $G_i$ |
|---|---|---|---|---|---|---|
| White part | a | b | c | a | b | c |
| Black part | d | e | d | d | e | d |

For calculation manners of a to e in Table 4 to Table 9a, refer to the descriptions of the corresponding formulas in Manner 1.1 to Manner 1.6. Details are not described herein again.

It should be understood that Table 2 to Table 9a merely show examples of some encoding results in Example 2, and more encoding results may be generated according to the encoding scheme in FIG. 6b in Example 2.

In Example 2, although the six frames of images are obtained through encoding, in another embodiment, there may be any quantity of frames of images greater than three frames.

After S202 and S103, the transmit end may perform S104.

S304: The transmit end may replace the $i^{th}$ frame of image $O_i$ in the original video with the image $A_i$, the image $B_i$, the image $C_i$, the image $D_i$, the image $E_i$, and the image $G_i$, and sequentially play the six frames of images cyclically for n times in the original video.

Herein, n is a positive integer.

An implementation principle of S304 is the same as an implementation principle of S104 shown in FIG. 6b in Example 1. Details are not described herein again.

S305: The transmit end cyclically performs S303 and S304 based on a next frame of image in the original video, to update, based on the next frame of image, the sixth frames of images obtained by encoding the black-and-white two-dimensional code $QR_0$. This process is repeated until a last frame of image in the original video.

Different from Example 1, in Example 2, the black part that represents the bit 1 and that is in the black-and-white two-dimensional code is encoded with at least two types of luminance, and the white part that represents the bit 0 and that is in the black-and-white two-dimensional code is encoded with at least three types of luminance, to obtain the six frames of images through encoding. In the six frames of images, there are three types of luminance for luminance values (for example, a, b, and c) after the corresponding white part is encoded, and there are at least two types of luminance for luminance values (for example, at least two of d, e, and f) after the corresponding black part is encoded. In this way, between the six frames of images obtained by encoding the black-and-white two-dimensional code by the transmit end, there may be a luminance change (at least three types of luminance) of the white region, and there may be a luminance change of the black region. A technical problem in the conventional technology can also be resolved.

In addition, although in Table 3 to Table 9a, encoding results of the white region in the black-and-white two-dimensional code are repeated in a sequence of a, b, and c in the six frames of images. In another embodiment, encoding results of the white region in two adjacent frames of images in the six frames of output images are the same. For example, an encoding result of the white region in the image $A_i$, the image $B_i$, the image $C_i$, the image $D_i$, the image $E_i$, and the image $G_i$ is sequentially a, a, b, b, c, and c, or a, b, c, c, a, and b, or is any permutation and combination.

In other words, in this application, an arrangement sequence of a plurality of types of luminance after encoding of the white region or the black region in the black-and-white two-dimensional code in the six frames of images is not limited.

In some embodiments, a scheme of encoding the white region or the black region in the black-and-white two-dimensional code by the transmit end may be extended.

For example, in Example 2, a scheme of encoding the white region in the black-and-white two-dimensional code by the transmit end is to circulate once with abcabc shown in Table 3 to Table 9a. In another embodiment, when more than six frames of images are generated through encoding, a constant sequence may be further inserted into a cyclic process of the foregoing encoding result. For example, the encoding scheme (for example, abcabc) for the white region may be extended to any one of a<u>aa</u>bca<u>aa</u>bc, ab<u>bbb</u>cab<u>bbb</u>c, abc<u>ccc</u>abcccc, a<u>c</u>bca<u>c</u>bc, and the like. A principle of extending the encoding scheme for the black region is similar. In the foregoing example encoding schemes, an underlined sequence is a newly added constant sequence. At the receive end, a decoding scheme corresponding to the encoding scheme is used to perform differential processing on a shot video frame with a corresponding frame number, to obtain the black-and-white two-dimensional code through decoding. That is, after the encoding scheme is adjusted, the decoding scheme also needs to be adjusted.

For example, Table 9b shows an example of a possible encoding result of eight frames of images (an image $A_i$, an image $B_i$, an image $C_i$, an image $D_i$, an image $E_i$, an image $G_i$, an image $H_i$, and an image $K_i$) obtained by encoding the white region in the black-and-white two-dimensional code in the encoding scheme acbcacbe. For example, the black region in the black-and-white two-dimensional code is encoded with d. For calculation manners of a, b, c, and d, refer to related descriptions in Manner 1.1 to Manner 1.6. Details are not described herein again.

Table 9b

|  | Image $A_i$ | Image $B_i$ | Image $C_i$ | Image $D_i$ | Image $E_i$ | Image $G_i$ | Image $H_i$ | Image $K_i$ |
|---|---|---|---|---|---|---|---|---|
| White part | a | c | b | c | a | c | b | c |
| Black part | d | d | d | d | d | d | d | d |

Example 3

Implementation processes of Example 3 and Example 2 are mostly the same. In Example 3, the process shown in FIG. 6b is also used to encode a black-and-white two-dimensional code, to generate six frames of images that are represented by $A_i$, $B_i$, $C_i$, $D_i$, $E_i$, and $G_i$ respectively.

The following describes a possible manner of generating the six frames of images generated in S303 shown in FIG. 6b.

In a possible implementation, Table 10 shows an example of a possible encoding result of the six frames of images (the image $A_i$, the image $B_i$, the image $C_i$, the image $D_i$, the image $E_i$, and the image $G_i$).

Table 10

|  | Image $A_i$ | Image $B_i$ | Image $C_i$ | Image $D_i$ | Image $E_i$ | Image $G_i$ |
|---|---|---|---|---|---|---|
| White part | a | b | c | a | b | c |
| Black part | d | e | d | e | d | e |

Definitions and explanations of the "white part" and the "black part" in Table 10 are the same as those in Table 2. Details are not described herein again.

The following describes generation manners of the image $A_i$, the image $B_i$, the image $C_i$, the image $D_i$, the image $E_i$, and the image $G_i$ in Table 10 with reference to Manner 2.1 to Manner 2.6.

Manner 2.1: The generation manner of the image $A_i$ is as follows: An output signal of the white part is a, and an output signal of the black part is d.

Herein, $a=O_i+ga*QR_0$, $d=O_i+gd*QR_b$, and ga and gd are gains corresponding to the white part and the black part during generation of the image $A_i$. Calculation principles are similar to those of Formula 1 and Formula 2 in Example 1.

Manner 2.2: The generation manner of the image $B_i$ is as follows: An output signal of the white part is b, and an output signal of the black part is e, where $b=O_i+gb*QR_0$, $e=O_i+ge*QR_b$, and gb and ge are gains corresponding to the white part and the black part during generation of the image $B_i$.

Manner 2.3: The generation manner of the image $C_i$ is as follows: An output signal of the white part is c, and an output signal of the black part is d, where $c=O_i+gc*QR_0$, $d=O_i+gd*QR_b$, and gc and gd are gains corresponding to the white part and the black part during generation of a Ci frame.

Manner 2.4: The generation manner of the image $D_i$ is as follows: An output signal of the white part is a, and an output signal of the black part is e, where $a=O_i+ga*QR_0$, $e=O_i+ge*QR_b$, and ga and ge are gains corresponding to the white part and the black part during generation of the image $D_i$.

Manner 2.5: The generation manner of the image $E_i$ is as follows: An output signal of the white part is b, and an output signal of the black part is d, where $b=O_i+gb*QR_0$, $d=O_i+gd*QR_b$, and gb and gd are gains corresponding to the white part and the black part during generation of the image $E_i$.

Manner 2.6: The generation manner of the image $G_i$ is as follows: An output signal of a white part is c, and an output signal of a black part is e, where $c=O_i+gc*QR_0$, $e=O_i+ge*QR_b$, and gc and ge are gains corresponding to the white part and the black part during generation of the image $G_i$.

With reference to Manner 2.1 to Manner 2.6, the following provides an example of encoding in a luminance domain in the manner in Table 10.

A grayscale value (namely, a luminance value) of a white region (also expressed as a white part) in the to-be-encoded black-and-white two-dimensional code $QR_0$ is an average value of RGB values of all pixels, and is 255 herein. Similarly, a grayscale value of a black region (also expressed as the black part) in the black-and-white two-dimensional code $QR_0$ is 0. For example, a grayscale value of an image $O_i$ is 127.

The following provides an encoding example.

It is assumed that ga=0.5, gb=0, gc=-0.5, gd=0.5, and ge=-0.5. A transmit end may obtain through calculation according to the formulas in Manner 2.1 to Manner 2.6: $a=O_i+ga*QR_0=255$, $b=O_i+gb*QR_0=127$, $c=O_i+gc*QR_0=0$, $d=O_i+gd*QR_b=255$, and $e=O_i+ge*QR_b=0$. With reference to Table 10, Table 11 provides specific grayscale values that correspond to the white part and the black part and that are in the six frames of images obtained through encoding in this application.

Table 11

|  | Image $A_i$ | Image $B_i$ | Image $C_i$ | Image $D_i$ | Image $E_i$ | Image $G_i$ |
|---|---|---|---|---|---|---|
| White part | 255 | 127 | 0 | 255 | 127 | 0 |
| Black part | 255 | 0 | 255 | 0 | 255 | 0 |

In some embodiments, similar to Table 10 and related descriptions, the six frames of images generated by the transmit end may alternatively be an encoding result shown in Table 12.

Table 12 shows an example of a possible encoding result of the six frames of images obtained through encoding in FIG. 6b.

Table 12

|  | Image $A_i$ | Image $B_i$ | Image $C_i$ | Image $D_i$ | Image $E_i$ | Image $G_i$ |
|---|---|---|---|---|---|---|
| White part | a | b | c | a | b | c |
| Black part | e | d | e | d | e | d |

In Example 2, in the six frames of images obtained through encoding, luminance of the black region in the black-and-white two-dimensional code changes every two frames of images. In Example 3, luminance of the black region in the black-and-white two-dimensional code changes per frame of image, and the black region in the black-and-white two-dimensional code is encoded with only two types of luminance: d and e. After the solution is used, a video still looks like an original video (for example, a processed random checkerboard slow-motion video still looks like a random checkerboard slow-motion video), but a pattern shot by a camera at a receive end can be correctly decoded.

Example 4

Implementation processes of Example 4 and Example 2 are mostly the same. In Example 4, the process shown in FIG. 6b is also used to encode a black-and-white two-dimensional code, to generate six frames of images that are represented by $A_i$, $B_i$, $C_i$, $D_i$, $E_i$, and $G_i$ respectively.

The following describes a possible manner of generating the six frames of images generated in S303 shown in FIG. 6b.

In a possible implementation, Table 13 shows an example of a possible encoding result of the six frames of images (the image $A_i$, the image $B_i$, the image $C_i$, the image $D_i$, the image $E_i$, and the image $G_i$).

Table 13

|  | Image $A_i$ | Image $B_i$ | Image $C_i$ | Image $D_i$ | Image $E_i$ | Image $G_i$ |
|---|---|---|---|---|---|---|
| White part | a | b | c | a | b | c |
| Black part | d | d | d | e | e | e |

Definitions and explanations of the "white part" and the "black part" in Table 13 are the same as those in Table 2. Details are not described herein again.

The following describes generation manners of the image $A_i$, the image $B_i$, the image $C_i$, the image $D_i$, the image $E_i$, and the image $G_i$ in Table 13 with reference to Manner 3.1 to Manner 3.6.

Manner 3.1: The generation manner of the image $A_i$ is as follows: An output signal of the white part is a, and an output signal of the black part is d.

Herein, a=$O_i$+ga*$QR_0$, d=$O_i$+gd*$QR_b$, and ga and gd are gains corresponding to the white part and the black part during generation of the image $A_i$. Calculation principles are similar to those of Formula 1 and Formula 2 in Example 1.

Manner 3.2: The generation manner of the image $B_i$ is as follows: An output signal of the white part is b, and an output signal of the black part is d, where b=$O_i$+gb*$QR_0$, d=$O_i$+gd*$QR_{b0}$, and gb and gd are gains corresponding to the white part and the black part during generation of the image $B_i$.

Manner 3.3: The generation manner of the image $C_i$ is as follows: An output signal of the white part is c, and an output signal of the black part is d, where c=$O_i$+gc*$QR_0$, d=$O_i$+gd*$QR_b$, and gc and gd are gains corresponding to the white part and the black part during generation of a Ci frame.

Manner 3.4: The generation manner of the image $D_i$ is as follows: An output signal of the white part is a, and an output signal of the black part is e, where a=$O_i$+ga*$QR_0$, e=$O_i$+ge*$QR_b$, and ga and ge are gains corresponding to the white part and the black part during generation of the image $D_i$.

Manner 3.5: The generation manner of the image $E_i$ is as follows: An output signal of the white part is b, and an output signal of the black part is e, where b=$O_i$+gb*$QR_0$, e=$O_i$+ge*$QR_b$, and gb and ge are gains corresponding to the white part and the black part during generation of the image $E_i$.

Manner 3.6: The generation manner of the image $G_i$ is as follows: An output signal of a white part is c, and an output signal of a black part is e, where c=$O_i$+gc*$QR_0$, e=$O_i$+ge*$QR_b$, and gc and ge are gains corresponding to the white part and the black part during generation of the image $G_i$.

With reference to Manner 3.1 to Manner 3.6, the following provides an example of encoding in a luminance domain in the manner in Table 13.

A grayscale value (namely, a luminance value) of a white region (also expressed as the white part) in the to-be-encoded black-and-white two-dimensional code $QR_0$ is an average value of RGB values of all pixels, and is 255 herein. Similarly, an adjusted grayscale value of a black region (also expressed as the black part) in the black-and-white two-dimensional code $QR_0$ is $QR_b$, and is 255 herein. For example, a grayscale value of an image $O_i$ is 127.

The following provides an encoding example.

It is assumed that ga=0.5, gb=0, gc=-0.5, gd=0.5, and ge=-0.5. A transmit end may obtain through calculation according to the formulas in Manner 3.1 to Manner 3.6: a=$O_i$+ga*$QR_0$=255, b=$O_i$+gb*$QR_0$=127, c=$O_i$+gc*$QR_0$=0, d=$O_i$+gd*$QR_b$=255, and e=$O_i$+ge*$QR_b$=0. With reference to Table 13, Table 14 provides specific grayscale values that correspond to the white part and the black part and that are in the six frames of images obtained through encoding in this application.

Table 14

|  | Image $A_i$ | Image $B_i$ | Image $C_i$ | Image $D_i$ | Image $E_i$ | Image $G_i$ |
|---|---|---|---|---|---|---|
| White part | 255 | 127 | 0 | 255 | 127 | 0 |
| Black part | 255 | 255 | 255 | 0 | 0 | 0 |

It should be understood that gain values of ga, gb, gc, gd, and ge are independent of each other.

In some embodiments, when gain adjustment is performed on the white region in the black-and-white two-dimensional code, an average value of the three gains ga, gb, and gc is 0. In this way, luminance changes of the white region between the image $A_i$, the image $B_i$, and the image $C_i$ are uniform, and luminance changes of the white region between the image $D_i$, the image $E_i$, and the image $G_i$ are uniform. In addition, when the transmit end performs gain adjustment on the black region in the black-and-white two-dimensional code, an average value of the three gains gd and ge may be 0. In this way, luminance changes of the black region between every three frames in the image $A_i$, the image $B_i$, the image $C_i$, the image $D_i$, the image $E_i$, and the image $G_i$ are uniform.

In some embodiments, similar to Table 13 and related descriptions, the six frames of images generated by the transmit end may alternatively be any one of encoding results shown in Table 15 to Table 19.

Table 15 shows an example of a possible encoding result of the six frames of images obtained through encoding in FIG. 6b.

Table 15

|  | Image $A_i$ | Image $B_i$ | Image $C_i$ | Image $D_i$ | Image $E_i$ | Image $G_i$ |
|---|---|---|---|---|---|---|
| White part | a | b | c | a | b | c |
| Black part | d | d | e | e | e | e |

Table 16 shows an example of a possible encoding result of the six frames of images obtained through encoding in FIG. 6b.

Table 16

|  | Image $A_i$ | Image $B_i$ | Image $C_i$ | Image $D_i$ | Image $E_i$ | Image $G_i$ |
|---|---|---|---|---|---|---|
| White part | a | b | c | a | b | c |
| Black part | d | e | e | e | d | d |

Table 17 shows an example of a possible encoding result of the six frames of images obtained through encoding in FIG. 6b.

Table 17

|  | Image $A_i$ | Image $B_i$ | Image $C_i$ | Image $D_i$ | Image $E_i$ | Image $G_i$ |
|---|---|---|---|---|---|---|
| White part | a | b | c | a | b | c |

(continued)

|  | Image $A_i$ | Image $B_i$ | Image $C_i$ | Image $D_i$ | Image $E_i$ | Image $G_i$ |
|---|---|---|---|---|---|---|
| Black part | e | e | e | d | d | d |

Table 18 shows an example of a possible encoding result of the six frames of images obtained through encoding in FIG. 6b.

Table 18

|  | Image $A_i$ | Image $B_i$ | Image $C_i$ | Image $D_i$ | Image $E_i$ | Image $G_i$ |
|---|---|---|---|---|---|---|
| White part | a | b | c | a | b | c |
| Black part | e | e | d | d | d | e |

Table 19 shows an example of a possible encoding result of the six frames of images obtained through encoding in FIG. 6b.

Table 19

|  | Image $A_i$ | Image $B_i$ | Image $C_i$ | Image $D_i$ | Image $E_i$ | Image $G_i$ |
|---|---|---|---|---|---|---|
| White part | a | b | c | a | b | c |
| Black part | e | d | d | d | e | e |

For calculation manners of a to e in Table 13 to Table 19, refer to the descriptions of the corresponding formulas in Manner 1.1 to Manner 1.6. Details are not described herein again.

It should be understood that Table 13 to Table 19 merely show examples of some encoding results in Example 4, and more encoding results may be generated according to the encoding scheme in FIG. 6b in Example 4.

In Example 4, although the six frames of images are obtained through encoding, in another embodiment, there may be any quantity of frames of images greater than three frames.

In Example 4, in the six frames of images obtained through encoding, the black region in the black-and-white two-dimensional code may be encoded with two types of luminance: d and e. After the solution is used, a video still looks like an original video (for example, a processed random checkerboard slow-motion video still looks like a random checkerboard slow-motion video), but a pattern shot by a camera at a receive end can be correctly decoded.

In addition, although in Table 13 to Table 19, encoding results of the black region in the black-and-white two-dimensional code may be repeated in any permutation and combination of d and e in the six frames of images. This is not limited in this application. Similarly, when the transmit end encodes the black region in the black-and-white two-dimensional code with three or more types of luminance, in the generated six frames of images (not limited to the six frames, as long as there are three or more frames), the three or more types of luminance may also be freely combined and arranged in any manner in the six frames of images, so that there may be three or more luminance changes of the black region in the black-and-white two-dimensional code between the six frames of images.

It should be understood that the encoding scheme of the transmit end in this application is not limited to Example 1 to Example 4. The processing process of the transmit end in this application may be further applied to processing of another graphic code. In the encoding scheme, at least one type of region in a type of region representing a bit 1 and another type of region representing a bit 0 in a graphic code may also be encoded with three or more colors in a color domain. A method is similar, and details are not described herein again.

The following describes a processing process of a transmit end and a processing process of a receive end in this application with reference to specific embodiments.

The following separately describes a processing process of a receive end in this application by using Example 5 to Example 8 as examples.

Example 5

Because an encoding scheme of a transmit end matches a decoding scheme of the receive end, if the transmit end performs encoding by using a method in Example 1, the receive end may perform decoding by using a method in Example 5, to obtain a black-and-white two-dimensional code $QR_0$.

The transmit end encodes the black-and-white two-dimensional code $QR_0$ by using Example 1, to generate an

image $N_i$, an image $R_i$, and an image $O'_i$, and fuses the three frames of images into an original video for cyclic playing.

Refer to FIG. 4b and FIG. 5b. FIG. 4b and FIG. 5b in this application may be compared with FIG. 4a and FIG. 5a in the conventional technology.

(1) in FIG. 5b shows an example of a frame of image $F_i$ of an encoded random checkerboard slow-motion video displayed on a display of the transmit end. The receive end may shoot at least two frames of images of the random checkerboard slow-motion video displayed on the display of the transmit end, where there are four frames of images: an image $R_{i-1}$, an image $R_i$, an image $R_{i+1}$, and an image $R_{i+2}$ herein; and decode three consecutive frames of images to obtain the black-and-white two-dimensional code $QR_0$.

In another embodiment, the receive end may alternatively decode at least two frames of images in shot three consecutive frames of images to obtain the black-and-white two-dimensional code.

In FIG. 4b, a single grid at a same location in the random checkerboard slow-motion video is used as an example to describe a decoding process of the receive end. The same rule applies to other grids. Details are not described herein again.

For example, display content at a location q1 shown in (1) in FIG. 5b is a grid in the encoded black-and-white two-dimensional code (for example, the image $N_i$). The grid located at the location q1 (which is a black grid in the black-and-white two-dimensional code, is represented by a bit 1, and corresponds to a white grid in an inverse two-dimensional code) may be consecutively refreshed and displayed between three types of luminance (a, b, and c shown in Table 1) according to the encoding scheme described in Example 1. The three types of luminance are respectively luminance of the grid at the location q1 in the image $N_i$, luminance of the grid at the location q1 in the image $R_i$, and luminance of the grid at the location q1 in the image $O'_i$.

(1) in FIG. 4b shows four frames of images of the grid at the location q1 shown in (1) in FIG. 5b: an image $f_{i-1}$, an image $f_i$, an image $f_{i+1}$, and an image $f_{i+2}$, in an image $F_{i-1}$, an image $F_i$, an image $F_{i+1}$, and an image $F_{i+2}$ in the encoded random checkerboard slow-motion video that are sequentially displayed on the screen of the transmit end.

As shown in FIG. 4b, B represents black (an RGB value is 0), G represents gray (an RGB value is 127), W represents white (an RGB value is 255), BG represents an RGB value of 64, and GW represents an RGB value of 191. This is merely an example, and is not intended to limit this application.

(1) in FIG. 4b (1) shows the four frames of images that are sequentially displayed in a video displayed by the transmit end and that are of the grid at the location q1 shown in (1) in FIG. 5b. Luminance of the image $f_{i-1}$, the image $f_i$, and the image $f_{i+1}$ is different, and luminance values (RGB values) thereof may be a, b, and c shown in Table 1 in Example 1. A luminance value of the image $f_{i+2}$ is the same as a luminance value of the image $f_{i-1}$. The rest may be deduced by analogy, a luminance value of an image $f_{i+3}$ is black represented by B (an RGB value is 0), and a luminance value of an image $f_{i+4}$ is white represented by W (an RGB value is 255). Details are not described herein again.

With reference to the screen refresh principle of the transmit end and the image shooting principle of the receive end that are described in FIG. 2 and FIG. 3, a diagonal fusion region is generated due to a rolling shutter and a progressive scanning update mechanism. In the image shot by the receive end, an upper left corner of each grid is a current frame of image, a lower right corner of each grid is a previous frame of pattern, and an intermediate region is gradient fusion of the two frames. It should be noted that a stripe pattern of the fusion region in the image shot by the receive end changes (in terms of a direction, a width, and the like) with a change of a camera sensor and a change of a screen operating mechanism of the receive end. This is not limited herein.

(2) in FIG. 4b shows four frames of images of the grid at the location q1 shown in (1) in FIG. 5b: an image $r_{i-1}$, an image $r_i$, an image $r_{i+1}$, and an image $r_{i+2}$, in the four frames of images (the image $R_{i-1}$, the image $R_i$, the image $R_{i+1}$, and the image $R_{i+2}$) that can be sequentially obtained by shooting the display content on the display of the transmit end by the receive end.

It should be understood that, when the receive end shoots the display content on the display screen of the transmit end to obtain the black-and-white two-dimensional code through decoding, the receive end is not limited to shooting four frames of images, and only needs to shoot at least two frames of images. In addition, the shot at least two frames of images may be two consecutive frames of images (for example, the image $R_i$ and the image $R_{i+1}$), or may be two inconsecutive frames of images (for example, the image $R_i$ and the image $R_{i+2}$). This is not limited herein.

As shown in (2) in FIG. 4b, the image $r_{i-1}$ shot by the receive end includes both a current frame, which is the image $f_{i-1}$ (a gray region represented by G) herein, and a previous frame, which is an image $f_{i-2}$ (a white region represented by W). In addition, a fusion region of the image $f_{i-1}$ and the image $f_{i-2}$ further exists between the gray region and the white region, and is a region represented by GW herein.

As shown in (2) in FIG. 4b, the image $r_i$ shot by the receive end includes both the image $f_i$ (a black region represented by B) and the image $f_{i-1}$ (a gray region represented by G). In addition, a fusion region of the image $f_i$ and the image $f_{i-1}$ further exists between the gray region and the black region, and is a region represented by BG herein.

Similarly, as shown in (2) in FIG. 4b, the image $r_{i+1}$ shot by the receive end includes both the image $f_{i+1}$ (a white region represented by W) and the image $f_i$ (a black region represented by B). In addition, a fusion region of the image $f_i$ and

the image $f_{i+1}$ further exists between the black region and the white region, and is a gray region represented by G herein.

Similarly, as shown in (2) in FIG. 4b, the image $r_{i+2}$ shot by the receive end includes both the image $f_{i+1}$ (a white region represented by W) and the image $f_{i+2}$ (a gray region represented by G). In addition, a fusion region of the image $f_{i+1}$ and the image $f_{i+2}$ further exists between the gray region and the white region, and is a region represented by GW herein.

Compared with the three frames of images shot by the receive end shown in (2) in FIG. 4a in the related technology, because the transmit end uses only two colors to encode a black region (or a white region) in the two-dimensional code, the transmit end alternately displays only a black image shown in (1) in FIG. 4a (for example, the image $f_i$ shown in (2) in FIG. 4a) and a white image shown in (1) in FIG. 4a (for example, the image $f_{i+1}$). However, a fusion region in any frame of shot image shown in (2) in FIG. 4a is a fusion region of a current frame and a previous frame, namely, a fusion region of a black image and a white image. As a result, respective fusion regions in two consecutive frames of images that are shown in (2) in FIG. 4a and that are shot by the receive end may have a same color, for example, gray represented by G shown in (2) in FIG. 4a. In a difference result (an image $|r_i\text{-}r_{i+1}|$ shown in (3) in FIG. 4a) between two consecutive frames of images shot by the receive end, there may be a black region (represented by B) in a fusion region. The fusion region is in a diagonal direction of the grid image, but the fusion region has a specific width. Therefore, a large quantity of pixels (for example, 10 to 25 pixels, and this is not limited) have a difference of black, resulting in decoding failure.

However, in this embodiment of this application, as shown in (1) in FIG. 4b, the transmit end alternately displays images encoded with three colors (colors represented by G, B, and W) respectively. Similarly, a fusion region in any frame of image shot by the receive end is a fusion region of a current frame and a previous frame. However, because the transmit end encodes a same region in the two-dimensional code with the foregoing three colors, as shown in (2) in FIG. 4b, between pixels that correspond to a same location (which is the location q1 herein) and that are in any two frames of images (even two consecutive frames of images) shot by the receive end, fusion regions in the two frames of images have different luminance (or colors).

Refer to four frames of images shown in (2) in FIG. 4b that are at the location q1 and that are obtained by shooting the display of the transmit end by the receive end. Each of the four frames of images includes a fusion region of a current frame and a previous frame that are displayed by the transmit end. The fusion region extends from a lower left corner to an upper right corner, and has a specific width. However, luminance of fusion regions in three consecutive frames of images shown in (2) in FIG. 4b shot by the receive end is different.

Then, as shown in (3) in FIG. 4b, to decode the grid at the location q1 shown in (1) in FIG. 5b to obtain an image of the two-dimensional code at the location q1, the receive end may perform difference processing on at least one group of images (one group of images is two frames of images) in the three consecutive frames of images shown in (2) in FIG. 4b that are at the location q1 and that are obtained through shooting.

In this embodiment, the receive end may perform difference processing on the three consecutive frames of images shown in (2) in FIG. 4b that are at the location q1 and that are obtained through shooting. Specifically, the receive end may perform differential processing on the image $r_i$ and the image $r_{i+1}$ that are shown in (2) in FIG. 4b , and then calculate an absolute value, to obtain the image $|r_i - r_{i+1}|$ shown in (3) in FIG. 4b; the receive end may perform differential processing on the image $r_i$ and the image $r_{i+2}$ that are shown in (2) in FIG. 4b , and then calculate an absolute value, to obtain an image $|r_i\text{-}r_{i+2}|$ shown in (3) in FIG. 4b; and the receive end may perform differential processing on the image $r_{i+1}$ and the image $r_{i+2}$ that are shown in (2) in FIG. 4b , and then calculate an absolute value, to obtain an image $|r_{i+1}\text{-}r_{i+2}|$ shown in (3) in FIG. 4b.

In another embodiment, the receive end may perform difference processing only on two frames of shot images, to obtain any one of the three images shown in (3) in FIG. 4b. Even if the receive end performs difference processing on two shot consecutive frames of images, because luminance of fusion regions in the two frames of shot images is different (a reason is that the transmit end encodes the black region or the white region into three types of luminance), a difference result of the fusion regions is not 0 after the receive end performs difference processing on the two shot consecutive frames of images, and therefore, the black region shown in (3) in FIG. 4a is not obtained through difference processing.

Alternatively, in another embodiment, the receive end may perform difference processing on any two frames of images in the three frames of shot images, for example, to obtain the image $|r_i\text{-}r_{i+1}|$ and the image $|r_i\text{-}r_{i+2}|$ that are shown in (3) in FIG. 4b. Optionally, the receive end may perform fusion and binarization processing on the obtained images $|r_i\text{-}r_{i+1}|$ and $|r_i\text{-}r_{i+2}|$, or select one frame of image from the images $|r_i\text{-}r_{i+1}|$ and $|r_i\text{-}r_{i+2}|$ for binarization processing.

In this embodiment, as shown in (3) in FIG. 4b, no black region (represented by B) whose RGB value is 0 shown in (3) in FIG. 4a in the conventional technology exists in the three difference results: the image $|r_i\text{-}r_{i+1}|$, the image $|r_i\text{-}r_{i+2}|$, and the image $|r_{i+1}\text{-}r_{i+2}|$.

In this embodiment, because the transmit end displays the images of the encoded black-and-white two-dimensional code in a manner of cyclically displaying the three frames (for example, the image $N_i$, the image $R_i$, and the image $O_i'$ ), and a third frame is introduced in the solution of cyclically displaying the three frames, after the receive end performs differential processing on the shot images, there is no all-black region (an RGB value is 0) in a differential absolute value.

As shown in (3) in FIG. 4b, in three grids (squares) obtained through differential processing, only a darkened region exists in a diagonal direction, but no black region (an RGB value is 0, and the black region is represented by B) is included. If a black region exists in a grid, the grid cannot be quantized into a bit 1 based on a proper threshold, and can only be quantized into a bit 0. Therefore, the receive end may set a proper threshold for each square shown in (3) in FIG. 4b, to quantize a grid located at the location q1 shown in (1) in FIG. 5a into a bit 1, so as to decode the grid located at the location q1.

In this case, the receive end may shoot, according to a principle of the process in FIG. 4b, the images (which are four frames of images herein) sequentially displayed on the display of the transmit end: the image $F_{i-1}$, the image $F_i$, the image $F_{i+1}$, and the image $F_{i+2}$, to obtain the four frames of images: the image $R_{i-1}$, the image $R_i$, the image $R_{i+1}$, and the image $R_{i+2}$. As shown in (2) in FIG. 5b, the receive end may perform differential processing on the image $R_i$ and the image $R_{i+1}$, and then calculate an absolute value, to obtain a binarized image of the image $|R_i-R_{i+1}|$, where an image that is of the grid at the location q1 and that is in the image $|R_i-R_{i+1}|$ shown in (2) in FIG. 5b is the binarized image of the image $|r_i-r_{i+1}|$ shown in (3) in FIG. 4b. Similarly, as shown in (3) in FIG. 5b, the receive end may perform differential processing on the image $R_i$ and the image $R_{i+2}$, and then calculate an absolute value, to obtain a binarized image of the image $|R_i-R_{i+2}|$, where an image that is of the grid at the location q1 and that is in the image $|R_i-R_{i+2}|$ shown in (3) in FIG. 5b is the binarized image of the image $|r_i-r_{i+2}|$ shown in (3) in FIG. 4b.

It can be seen from decoding results of the receive end shown in (2) in FIG. 5b and (3) in FIG. 5b that the two-dimensional code cannot be obtained by restoring the image shown in (2) in FIG. 5b, and the image shown in (3) in FIG. 5b is the black-and-white two-dimensional code $QR_0$ obtained through correct decoding. In this way, under effect of a refresh stripe, the receive end can also correctly extract the black-and-white two-dimensional code.

In Example 1, the transmit end encodes the black region in the black-and-white two-dimensional code (that is, the white region in the inverse two-dimensional code) with three types of luminance, to obtain the image $N_i$, the image $R_i$, and the image $O_i'$. After the receive end performs differential processing according to the foregoing process, a black grid in shown in FIG. 5b that is in the black-and-white two-dimensional code and that is at the location q1 is used as an example for description. According to the process in FIG. 4b, the black grid may be binarized into 1, and the white region in the black-and-white two-dimensional code (corresponding to the black region in the inverse two-dimensional code, refer to Table 1) is encoded with the same luminance (for example, d). Therefore, according to the principle of the process in FIG. 4b, after the receive end performs differential processing on the shot images, the white region in the black-and-white two-dimensional code may be differentiated into 0 (that is, a differential result is an all-black region, and an RGB value represented by B is 0). In this case, the receive end may distinguish between a differential result of the white region (the differential result is 0) and a differential result of the black region (the differential result is not 0, and as shown in (3) in FIG. 4b, no all-black region represented by B exists in a grid of any differential result) in the black-and-white two-dimensional code, so as to correctly decode the black-and-white two-dimensional code hidden in the video.

(3) in FIG. 5b shows a process of performing differential processing on the two frames of shot images, binarizing the differential results, and optionally performing color inversion processing on a binarization result, to restore and obtain the black-and-white two-dimensional code.

When the receive end obtains the original black-and-white two-dimensional code $QR_0$ based on the difference result, whether to perform color inversion processing on the binarized differential result (also referred to as a differential image), that is, adjust the black grid in the differential image to a white grid and adjust the white grid in the differential image to a black grid, is related to whether the transmit end performs color inversion processing on the black-and-white two-dimensional code $QR_0$, and is also related to two frames of shot images that are specifically selected by the receive end for differential processing.

In Example 5, when performing encoding by using Example 1, the transmit end performs color inversion processing on the black-and-white two-dimensional code $QR_0$. In addition, as shown in Table 1, the encoding result of the black region in the inverse two-dimensional code $QR_r$ is d, and a differential value of the encoding results is 0. In this case, the black region is binarized into 0 (represented by a white grid in the differential image). Therefore, in Example 5, the receive end may perform color inversion processing on an image (that is, the differential image) obtained through differential result binarization, to obtain the black-and-white two-dimensional code $QR_0$.

In some embodiments, the receive end may determine, according to the following policy, whether to perform color inversion processing on the differential image:

For example, if a color of a pattern that carries information and that is in the differential image obtained through binarization is the same as a background color (a color of a border of the two-dimensional code), for example, white, the receive end may perform color inversion processing on the differential image obtained through binarization, to obtain the black-and-white two-dimensional code $QR_0$. On the contrary, if a color of a pattern that carries information and that is in the differential image obtained through binarization is different from a background color (a color of a border of the two-dimensional code is white), it indicates that the color of the pattern that carries the information and that is in the differential image obtained through binarization is black (black in the two-dimensional code indicates a bit 1), and the receive end may not perform color inversion processing.

In some embodiments, the black-and-white two-dimensional code cannot be directly restored from a single differential result of two frames of images in the at least three frames of images shot by the receive end. For example, only a part of the two-dimensional code is restored from a binarized image of the differential result shown in (2) in FIG. 5b.

In some embodiments, with reference to the encoding scheme in Example 1, the receive end in this application may further fuse a plurality of differential results to obtain the complete black-and-white two-dimensional code.

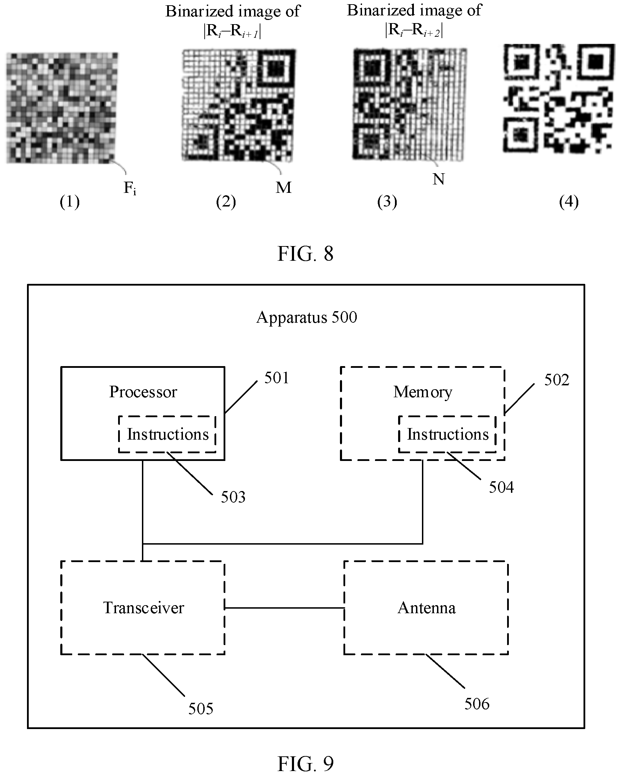

Specifically, refer to FIG. 8.

(1) in FIG. 8 shows a frame of image, for example, the image Fi, in the video displayed by the transmit end.

An image M shown in (2) in FIG. 8 is the binarized image of the image $|R_i-R_{i+1}|$ obtained by the receive end by performing differential processing on the shot image $R_i$ and image $R_{i+1}$ according to the principle of the process in FIG. 4b, and then calculating the absolute value.

An image N shown in (3) in FIG. 8 is the binarized image of the image $|R_i-R_{i+2}|$ obtained by the receive end by performing differential processing on the shot image $R_i$ and image $R_{i+2}$ according to the principle of the process in FIG. 4b, and then calculating the absolute value.

It can be seen from (2) in FIG. 8 and (3) in FIG. 8 that two-dimensional codes respectively displayed in the image M and the image N that are restored by the receive end are incomplete. However, incomplete parts of the image M and the image N for the same black-and-white two-dimensional code are complementary. Therefore, the receive end may perform logical AND (and) operation on the image M and the image N by pixel, to obtain the complete black-and-white two-dimensional code shown in (4) in FIG. 8.

Table 20

| Image M | Image N | Image M and image N |
|---------|---------|---------------------|
| 0 | 0 | 0 |
| 0 | 1 | 0 |
| 1 | 0 | 0 |
| 1 | 1 | 1 |

Specifically, the receive end may assign 0 to black pixels (an RGB value is 0) in the image M and the image N and assign 1 to white pixels (an RGB value is 255) in the image M and the image N; then perform a logical AND operation on the image M and the image N by pixel according to a process of the logical AND operation in Table 20, to obtain a 21*21 matrix of 0 and 1; and finally, restores the matrix of 0 and 1 into the black-and-white two-dimensional code shown in (3) in FIG. 8 by using 0 as a black pixel and 1 as a white pixel.

In this embodiment, the receive end may first binarize differential results to obtain binarized images, and then fuse (for example, perform a logical AND operation, which is not specifically limited) the binarized images to obtain a complete two-dimensional code.

In some embodiments, when fusing two differential results, the receive end may first perform addition on the differential results, and then binarize the added differential results, to obtain a complete two-dimensional code.

In this way, the receive end can obtain the complete two-dimensional code by fusing a plurality of differential results.

Example 6

Because an encoding scheme of a transmit end matches a decoding scheme of the receive end, if the transmit end performs encoding by using a method in Example 2, the receive end may perform decoding by using a method in Example 6, to obtain a black-and-white two-dimensional code $QR_0$.

The transmit end encodes the black-and-white two-dimensional code $QR_0$ by using Example 2, to generate six frames of images: an image $A_i$, an image $B_i$, an image $C_i$, an image $D_i$, an image $E_i$, and an image $G_i$, and fuses the six frames of images into an original video for cyclic playing.

Most processes in Example 6 are the same as those in Example 5. The following mainly describes a difference between the two examples.

The receive end may perform differential processing on an image $R_i$ and an image $R_{i+3}$ that are shot from a video displayed by the transmit end, calculate an absolute value after differential processing, and then perform binarization processing, to obtain an inverse two-dimensional code $QR_r$.

For example, the receive end may perform differential processing and absolute value calculation (which means that differential processing is first performed and then an absolute value is calculated for a differential result) on a first frame of shot image and a fourth frame of shot image, or perform differential processing and absolute value calculation on a second frame of shot image and a fifth frame of shot image, to obtain the inverse two-dimensional code QR$_r$.

Optionally, the receive end may perform color inversion processing on the obtained inverse two-dimensional code QR$_r$, to obtain the black-and-white two-dimensional code QR$_0$. For whether to perform color inversion processing, refer to related descriptions in Example 5. Details are not described herein again.

Example 7

Because an encoding scheme of a transmit end matches a decoding scheme of the receive end, if the transmit end performs encoding by using a method in Example 3, the receive end may perform decoding by using a method in Example 7, to obtain a black-and-white two-dimensional code $QR_0$.

The transmit end encodes the black-and-white two-dimensional code $QR_0$ by using Example 3, to generate six frames of images: an image $A_i$, an image $B_i$, an image $C_i$, an image $D_i$, an image $E_i$, and an image $G_i$, and fuses the six frames of images into an original video for cyclic playing.

Most processes in Example 7 are the same as those in Example 6. The following mainly describes a difference between the two examples.

The receive end may perform differential processing on an image R$_i$ and an image R$_{i+2}$ that are shot from a video displayed by the transmit end, and calculate an absolute value after differential processing, to obtain a differential result (a principle is similar to that of the three differential results shown in (3) in FIG. 4b).

For example, the receive end may perform differential processing and absolute value calculation (which means that differential processing is first performed and then an absolute value is calculated for a differential result) on a second frame of shot image and a fourth frame of shot image, or perform differential processing and absolute value calculation on a third frame of shot image and a fifth frame of shot image, to obtain a plurality of differential results.

In some embodiments, after a single differential result is binarized, the two-dimensional code may not be completely restored. In this case, the receive end may fuse the plurality of differential results to obtain an inverse two-dimensional code QR$_r$. For a specific fusion solution, refer to the descriptions of the related fusion solution in Example 5. Details are not described herein again.

Optionally, the receive end may perform color inversion processing on the obtained inverse two-dimensional code QR$_r$, to obtain the black-and-white two-dimensional code QR$_0$.

Example 8

Because an encoding scheme of a transmit end matches a decoding scheme of the receive end, if the transmit end performs encoding by using a method in Example 4, the receive end may perform decoding by using a method in Example 8, to obtain a black-and-white two-dimensional code $QR_0$.

The transmit end encodes the black-and-white two-dimensional code $QR_0$ by using Example 4, to generate six frames of images: an image $A_i$, an image $B_i$, an image $C_i$, an image $D_i$, an image $E_i$, and an image $G_i$, and fuses the six frames of images into an original video for cyclic playing.

Most processes in Example 8 are the same as those in Example 6. The following mainly describes a difference between the two examples.

The receive end may perform differential processing on an image R$_i$ shot from a video displayed by the transmit end and each of an image R$_{i+1}$, an image R$_{i+2}$, and an image R$_{i+3}$, and calculate each absolute value after differential processing, to obtain differential results (a principle is similar to that of the differential results shown in (3) in FIG. 4b). The differential results herein include an image $|R_i - R_{i+1}|$, an image $|R_i - R_{i+2}|$, and an image $|R_i - R_{i+3}|$.

In some embodiments, after a single differential result is binarized, the two-dimensional code may not be completely restored. In this case, the receive end may fuse the plurality of differential results to obtain an inverse two-dimensional code $QR_r$. For a specific fusion solution, refer to the descriptions of the related fusion solution in Example 5. Details are not described herein again.

Finally, the receive end may perform color inversion processing on the obtained inverse two-dimensional code $QR_r$, to obtain the black-and-white two-dimensional code $QR_0$.

Because a screen is refreshed row by row (60 Hz), and a camera is also exposed row by row (for example, 60 fps), the receive end may shoot a tilted refresh stripe with a slow movement speed (including both an $i^{th}$ frame of image and an $(i-1)^{th}$ frame of image and an average value of the two frames) in a shooting process. However, an existing differential encoding scheme is affected by the refresh stripe, and therefore cannot obtain the graphic code through correct differential decoding. In this application, the transmit end adds at least one new frame on the basis of a dual-frame differential video. In Example 5 to Example 8 in this application, there is no completely same pattern at same corresponding locations in different video frames of a video shot by the receive end, and a complete two-dimensional code may be obtained through differential processing, to resolve impact of the refresh stripe. After the technical solution in this application is used, the graphic code hidden in the video is not easy to be found by human eyes. However, the receive end can shoot the image to obtain the graphic code through correct decoding, so as to obtain, through decoding, target information carried in the graphic code.

In a possible implementation, this application provides an image processing apparatus. The image processing apparatus includes: an obtaining module, configured to shoot at least three frames of images alternately displayed on a screen of a transmit end, to obtain at least two frames of images, where the at least three frames of images are an encoding result of a first graphic code, and the at least three frames of images include a first image, a second image, and a third image, where at least one first unit pattern in the first part in the first image is encoded based on a first image parameter, the at least one first unit pattern in the first part in the second image is encoded based on a second image parameter, and the at least one first unit pattern in the first part in the third image is encoded based on a third image parameter; an encoding module, configured to calculate a difference between image parameters for at least one group of two frames of images in the at least two frames of images; and a display module, configured to obtain the first graphic code based on the difference, to obtain target information represented by the first graphic code.

In a possible implementation, the first image parameter, the second image parameter, and the third image parameter are different from each other in color space.

In a possible implementation, luminance of the first image parameter, the second image parameter, and the third image parameter is different from each other.

In a possible implementation, the first graphic code further includes a second part, and the second part in the at least three frames of images is encoded based on a same image parameter.

In a possible implementation, the first graphic code further includes a second part. At least one second unit pattern in the second part in the first image is encoded based on a fourth image parameter, the at least one second unit pattern in the second part in the second image is encoded based on a fifth image parameter, and the at least one second unit pattern in the second part in the third image is encoded based on a sixth image parameter.

In a possible implementation, the fourth image parameter, the fifth image parameter, and the sixth image parameter are different from each other in the color space.

In a possible implementation, luminance of the fourth image parameter, the fifth image parameter, and the sixth image parameter is different from each other.

In a possible implementation, the display module is specifically configured to alternately display the at least three frames of images on a background image, where a pattern in the background image is related to a pattern in the first graphic code.

In a possible implementation, the background image is a dynamic image.

In a possible implementation, a size of the pattern in the first graphic code is less than or equal to a size of the related pattern in the background image.

In a possible implementation, an average value of the first image parameter, the second image parameter, and the third image parameter is related to an image parameter of the background image.

In a possible implementation, the encoding module is specifically configured to encode the first graphic code based on a fourth image, to generate the at least three frames of images of the first graphic code.

In a possible implementation, the display module is specifically configured to: alternately display the first image, the second image, and the third image, and repeat n alternate display processes, where n is a positive integer.

In a possible implementation, in the n alternate display processes of the at least three frames of images, at least two alternate display processes have different image display sequences.

In a possible implementation, the at least three frames of images further include at least one frame of fifth image, where the first part in the fifth image is encoded based on the first image parameter. The display module is specifically configured to: alternately display the first image, the second image, the third image, and the at least one frame of fifth image, and repeat n alternate display processes.

In a possible implementation, an image display sequence corresponding to at least one alternate display process of the at least three frames of images is the first image, the second image, and the third image, and the second image parameter is related to an average value of the first image parameter and the third image parameter.

Effect of the image processing apparatus in the implementations is similar to a process and effect of the image processing method performed by the transmit end in the implementations. Details are not described herein again.

In a possible implementation, this application provides an image processing apparatus. The image processing apparatus includes: a shooting module, configured to shoot at least three frames of images alternately displayed on a screen of a transmit end, to obtain at least two frames of images, where the at least three frames of images are an encoding result of a first graphic code, and the at least three frames of images include a first image, a second image, and a third image, where at least one first unit pattern in the first part in the first image is encoded based on a first image parameter, the at least one first unit pattern in the first part in the second image is encoded based on a second image parameter, and the at least one first unit pattern in the first part in the third image is encoded based on a third image parameter; a calculation module, configured to calculate a difference between image parameters for at least one group of two frames of images in the at least two frames of images; and an obtaining module, configured to obtain the first graphic code based on the difference, to obtain target information represented by the first graphic code.

In a possible implementation, each of the at least two frames of images includes a fusion region, where the fusion region is a fused image of two frames of adjacently displayed images in the at least three frames of images displayed on the screen.

In a possible implementation, the at least two frames of images include a fourth image and a fifth image that are obtained through sequential shooting; and the calculation module is specifically configured to calculate the difference between the image parameters for the fourth image and the fifth image.

In a possible implementation, there are three or more frames of images in the at least two frames of images.

In a possible implementation, the calculation module is specifically configured to separately calculate a difference between image parameters for at least two groups of images in at least three frames of images obtained through shooting, to obtain at least two groups of differences, where each group of images in the at least two groups of images includes two frames of images. The obtaining module is specifically configured to fuse the at least two groups of differences to obtain the first graphic code.

In a possible implementation, the obtaining module is specifically configured to: perform binarization processing on the at least two groups of differences to obtain at least two groups of binarization results; and perform an AND operation on the at least two groups of binarization results to obtain the first graphic code.

In a possible implementation, the obtaining module is specifically configured to: perform addition on the at least two groups of differences to obtain an addition result; and perform binarization processing on the addition result to obtain the first graphic code.

Effect of the image processing apparatus in the implementations is similar to a process and effect of the image processing method performed by the receive end in the implementations. Details are not described herein again.

In a possible implementation, FIG. 9 is a diagram of a structure of an image processing apparatus according to an embodiment of this application. As shown in FIG. 9, the apparatus 500 may include a processor 501 and a transceiver 505, and optionally, may further include a memory 502.

The transceiver 505 may be referred to as a transceiver unit, a transceiver machine, a transceiver circuit, or the like, and is configured to implement a receiving function and a sending function. The transceiver 505 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function.

The memory 502 may store a computer program, software code, or instructions 504, where the computer program, the software code, or the instructions 504 may also be referred to as firmware. The processor 501 may implement the image processing method provided in embodiments of this application by running a computer program, software code, or instructions 503 in the processor 501, or by invoking the computer program, software code, or instructions 504 stored in the memory 502. The processor 501 may be a central processing unit (central processing unit, CPU), and the memory 502 may be, for example, a read-only memory (read-only memory, ROM) or a random access memory (random access memory, RAM).

The processor 501 and the transceiver 505 that are described in this application may be implemented in an integrated circuit (integrated circuit, IC), an analog IC, a radio frequency integrated circuit RFIC, a mixed-signal IC, an application-specific integrated circuit (application-specific integrated circuit, ASIC), a printed circuit board (printed circuit board, PCB), an electronic device, or the like.

The image processing apparatus 500 may further include an antenna 506. Modules included in the image processing apparatus 500 are merely examples for description. This is not limited in this application.

A structure of the image processing apparatus may not be limited by FIG. 9. The image processing apparatus may be an independent device or may be a part of a large device. For example, an implementation form of the image processing apparatus may be as follows:

(1) an independent integrated circuit IC, a chip, or a chip system or subsystem; (2) a set including one or more ICs, where optionally, the IC set may also include a storage component for storing data and instructions; (3) a module that can be embedded in another device; (4) a vehicle-mounted device or the like; or (5) others.

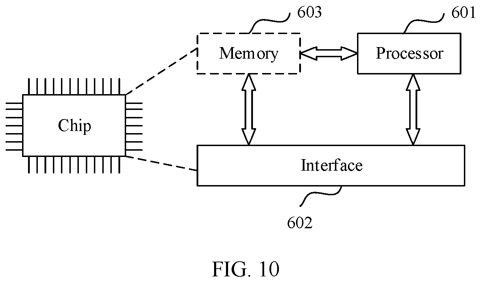

For a case in which the implementation form of the image processing apparatus is a chip or chip system, refer to a diagram of a structure of a chip shown in FIG. 10. The chip shown in FIG. 10 includes a processor 601 and an interface 602. There may be one or more processors 601, and there may be a plurality of interfaces 602. Optionally, the chip or chip system may include a memory 603.

All related content of the steps in the foregoing method embodiments may be cited in function descriptions of the corresponding functional modules. Details are not described herein again.

Based on a same technical concept, an embodiment of this application further provides a computer-readable storage medium. The computer-readable storage medium stores a computer program, the computer program includes at least one segment of code, and the at least one segment of code may be executed by a computer, to control the computer to implement the foregoing image processing method embodiments.

Based on a same technical concept, an embodiment of this application further provides a computer program. When the computer program is executed by a terminal device, the computer program is used to implement the foregoing image processing method embodiments.

The program may be completely or partially stored in a storage medium packaged with a processor, or may be partially or completely stored in a memory not packaged with a processor.

Based on a same technical concept, an embodiment of this application further provides a chip, including a processor. The processor may implement the foregoing image processing method embodiments.

Methods or algorithm steps described in combination with the content disclosed in embodiments of this application may be implemented by hardware, or may be implemented by a processor by executing a software instruction. The software instruction may include a corresponding software module. The software module may be stored in a random access memory (Random Access Memory, RAM), a flash memory, a read-only memory (Read-Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be disposed in an ASIC.

A person skilled in the art should be aware that in the foregoing one or more examples, functions described in embodiments of this application may be implemented by hardware, software, firmware, or any combination thereof. When the functions are implemented by the software, the foregoing functions may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another place. The storage medium may be any available medium accessible to a general-purpose or dedicated computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within protection of this application.

**Claims**

1.  An image processing method, wherein the method comprises:

    obtaining a first graphic code, wherein the first graphic code comprises a first part, to represent target information;
    encoding the first graphic code to generate at least three frames of images of the first graphic code, wherein the at least three frames of images comprise a first image, a second image, and a third image; and
    at least one first unit pattern in the first part in the first image is encoded based on a first image parameter, the at least one first unit pattern in the first part in the second image is encoded based on a second image parameter, and the at least one first unit pattern in the first part in the third image is encoded based on a third image parameter; and
    alternately displaying the at least three frames of images to transmit the target information.

2.  The method according to claim 1, wherein the first image parameter, the second image parameter, and the third image parameter are different from each other in color space.

3.  The method according to claim 1 or 2, wherein luminance of the first image parameter, the second image parameter, and the third image parameter is different from each other.

4.  The method according to any one of claims 1 to 3, wherein the first graphic code further comprises a second part; and the second part in the at least three frames of images is encoded based on a same image parameter.

5.  The method according to any one of claims 1 to 3, wherein the first graphic code further comprises a second part; and at least one second unit pattern in the second part in the first image is encoded based on a fourth image parameter, the at least one second unit pattern in the second part in the second image is encoded based on a fifth image parameter, and the at least one second unit pattern in the second part in the third image is encoded based on a sixth image parameter.

6. The method according to claim 5, wherein the fourth image parameter, the fifth image parameter, and the sixth image parameter are different from each other in the color space.

7. The method according to claim 5 or 6, wherein luminance of the fourth image parameter, the fifth image parameter, and the sixth image parameter is different from each other.

8. The method according to any one of claims 1 to 7, wherein alternately displaying the at least three frames of images to transmit the target information comprises:
   alternately displaying the at least three frames of images on a background image, wherein a pattern in the background image is related to a pattern in the first graphic code.

9. The method according to claim 8, wherein the background image is a dynamic image.

10. The method according to claim 8 or 9, wherein a size of the pattern in the first graphic code is less than or equal to a size of the related pattern in the background image.

11. The method according to any one of claims 8 to 10, wherein an average value of the first image parameter, the second image parameter, and the third image parameter is related to an image parameter of the background image.

12. The method according to any one of claims 1 to 11, wherein encoding the first graphic code to generate the at least three frames of images of the first graphic code comprises:
    encoding the first graphic code based on a fourth image, to generate the at least three frames of images of the first graphic code.

13. The method according to any one of claims 1 to 12, wherein alternately displaying the at least three frames of images to transmit the target information comprises:
    alternately displaying the first image, the second image, and the third image, and repeating n alternate display processes, wherein n is a positive integer.

14. The method according to claim 13, wherein in the n alternate display processes of the at least three frames of images, at least two alternate display processes have different image display sequences.

15. The method according to claim 13 or 14, wherein the at least three frames of images further comprise at least one frame of fifth image, wherein the first part in the fifth image is encoded based on the first image parameter; and alternately displaying the at least three frames of images to transmit the target information comprises:
    alternately displaying the first image, the second image, the third image, and the at least one frame of fifth image, and repeating n alternate display processes.

16. The method according to any one of claims 13 to 15, wherein an image display sequence corresponding to at least one alternate display process of the at least three frames of images is the first image, the second image, and the third image, and the second image parameter is related to an average value of the first image parameter and the third image parameter.

17. An image processing method, wherein the method comprises:

    shooting at least three frames of images alternately displayed on a screen of a transmit end, to obtain at least two frames of images, wherein
    the at least three frames of images are an encoding result of a first graphic code;
    the at least three frames of images comprise a first image, a second image, and a third image; and
    at least one first unit pattern in the first part in the first image is encoded based on a first image parameter, the at least one first unit pattern in the first part in the second image is encoded based on a second image parameter, and the at least one first unit pattern in the first part in the third image is encoded based on a third image parameter; and
    calculating a difference between image parameters for at least one group of two frames of images in the at least two frames of images; and
    obtaining the first graphic code based on the difference, to obtain target information represented by the first graphic code.

18. The method according to claim 17, wherein each of the at least two frames of images comprises a fusion region, wherein the fusion region is a fused image of two frames of adjacently displayed images in the at least three frames of images displayed on the screen.

19. The method according to claim 17 or 18, wherein the at least two frames of images comprise a fourth image and a fifth image that are obtained through sequential shooting; and calculating the difference between the image parameters for the at least one group of two frames of images in the at least two frames of images comprises:
calculating the difference between the image parameters for the fourth image and the fifth image.

20. The method according to claim 17 or 18, wherein there are three or more frames of images in the at least two frames of images.

21. The method according to claim 20, wherein calculating the difference between the image parameters for the at least one group of two frames of images in the at least two frames of images comprises:

separately calculating a difference between image parameters for at least two groups of images in at least three frames of images obtained through shooting, to obtain at least two groups of differences, wherein each group of images in the at least two groups of images comprises two frames of images; and
obtaining the first graphic code based on the difference, to obtain the target information represented by the first graphic code comprises:
fusing the at least two groups of differences to obtain the first graphic code.

22. The method according to claim 21, wherein fusing the at least two groups of differences to obtain the first graphic code comprises:

performing binarization processing on the at least two groups of differences to obtain at least two groups of binarization results; and
performing an AND operation on the at least two groups of binarization results to obtain the first graphic code.

23. The method according to claim 21, wherein fusing the at least two groups of differences to obtain the first graphic code comprises:

performing addition on the at least two groups of differences to obtain an addition result; and
performing binarization processing on the addition result to obtain the first graphic code.

24. An image processing apparatus, wherein the apparatus comprises:

an obtaining module, configured to obtain a first graphic code, wherein the first graphic code comprises a first part, to represent target information;
an encoding module, configured to encode the first graphic code to generate at least three frames of images of the first graphic code, wherein the at least three frames of images comprise a first image, a second image, and a third image, wherein
at least one first unit pattern in the first part in the first image is encoded based on a first image parameter, the at least one first unit pattern in the first part in the second image is encoded based on a second image parameter, and the at least one first unit pattern in the first part in the third image is encoded based on a third image parameter; and
a display module, configured to alternately display the at least three frames of images to transmit the target information.

25. An image processing apparatus, wherein the apparatus comprises:

a shooting module, configured to shoot at least three frames of images alternately displayed on a screen of a transmit end, to obtain at least two frames of images, wherein
the at least three frames of images are an encoding result of a first graphic code, and the at least three frames of images comprise a first image, a second image, and a third image; and
at least one first unit pattern in the first part in the first image is encoded based on a first image parameter, the at least one first unit pattern in the first part in the second image is encoded based on a second image parameter, and the at least one first unit pattern in the first part in the third image is encoded based on a third image parameter;
a calculation module, configured to calculate a difference between image parameters for at least one group of two frames of images in the at least two frames of images; and

an obtaining module, configured to obtain the first graphic code based on the difference, to obtain target information represented by the first graphic code.

26. A computer-readable storage medium, comprising a computer program, wherein when the computer program is run on a computer or a processor, the computer or the processor is enabled to perform the method according to any one of claims 1 to 16 or claims 17 to 23.

27. An image processing apparatus, comprising one or more interface circuits and one or more processors, wherein the interface circuit is configured to: receive a signal from a memory, and send the signal to the processor, wherein the signal comprises computer instructions stored in the memory; and when the processor executes the computer instructions, the processor is configured to perform the method according to any one of claims 1 to 16 or claims 17 to 23.

28. A computer program product, wherein the computer program product comprises a software program, and when the software program is executed by a computer or a processor, steps of the method according to any one of claims 1 to 16 or claims 17 to 23 are performed.

FIG. 1

i<sup>th</sup> frame

Frame
refreshing state

(i+1)<sup>th</sup> frame

(1)

(2)

(3)

FIG. 2

First column    Second column    Third column    Fourth column    Fifth column

FIG. 3

B = 0
W = 255
G = 127

(1)

$f_i$  $f_{i+1}$  $f_{i+2}$

B  W  B

$r_i$  $r_{i+1}$  $r_{i+2}$

(2)

B  W  B
G  G  G
W  B  W

$|r_i - r_{i+1}|$  $|r_i - r_{i+2}|$

(3)

Black region  B  B

FIG. 4a

B = 0
W = 255
G = 127
BG = 64
GW = 191

(1)

$f_{i-1}$  $f_i$  $f_{i+1}$  $f_{i+2}$

G  B  W  G

$r_{i-1}$  $r_i$  $r_{i+1}$  $r_{i+2}$

(2)

G  B  W  G
GW  BG  G  GW
W  G  B  W

$|r_i - r_{i+1}|$  $|r_i - r_{i+2}|$  $|r_{i+1} - r_{i+2}|$

(3)

W  G  G
BG  G  BG
G  W

Darked region

FIG. 4b

Binarized image of $|R_i{-}R_{i+1}|$

Binarized image of $|R_i{-}R_{i+2}|$

$F_i$

Location q1

Location q1

Location q1

(1)

(2)

(3)

FIG. 5a

Binarized image of $|R_i{-}R_{i+1}|$

Binarized image of $|R_i{-}R_{i+2}|$

$F_i$

Location q1

Location q1

Location q1

(1)

(2)

(3)

FIG. 5b

Generate a black-and-white first two-dimensional code $QR_0$ based on target information — S101

Generate an inverse second two-dimensional code $QR_r$ based on the first two-dimensional code $QR_0$ — S102

S201

$i^{th}$ frame of image $O_i$ in an original video

Fuse $QR_r$ with $O_i$ to generate two frames of images ($N_i$ and $R_i$) — S103

$i$++

S105   S202   $O'_i$

Sequentially play three frames $N_i$, $R_i$ and $O'_i$ cyclically for n times — S104

FIG. 6a

Generate a black-and-white first two-dimensional code $QR_0$ based on target information — S301

S201

$i^{th}$ frame of image $O_i$ in an original video

Fuse $QR_0$ with $O_i$ to generate six frames of images ($A_i\backslash B_i\backslash C_i\backslash D_i\backslash E_i\backslash G_i$) — S303

$i$++

S305

Sequentially play the six frames of images $A_i\backslash B_i\backslash C_i\backslash D_i\backslash E_i\backslash G_i$ for n times — S304

FIG. 6b

$QR_0$

(1)

$QR_r$

(2)

$O_i$

(3)

$N_i$      $R_i$      $O'_i$

(4)

FIG. 7a

FIG. 7b

Binarized image of
$|R_i-R_{i+1}|$

Binarized image of
$|R_i-R_{i+2}|$

F$_i$

M

N

(1)                    (2)                    (3)                    (4)

FIG. 8

Apparatus 500

Processor          501          Memory          502

Instructions                    Instructions

503                             504

Transceiver                     Antenna

505                             506

FIG. 9

FIG. 10

## INTERNATIONAL SEARCH REPORT

| International application No. |
| --- |
| **PCT/CN2023/122328** |

### A. CLASSIFICATION OF SUBJECT MATTER

G06K7/14(2006.01)i

According to International Patent Classification (IPC) or to both national classification and IPC

### B. FIELDS SEARCHED

Minimum documentation searched (classification system followed by classification symbols)

IPC: G06K

Documentation searched other than minimum documentation to the extent that such documents are included in the fields searched

Electronic data base consulted during the international search (name of data base and, where practicable, search terms used)

CNABS; CNTXT; DWPI; VEN; USTXT; WOTXT; EPTXT; CNKI: 码, 嵌, 图像, 视频, 编码, 解码, 颜色, 亮度, 融合, 差值, code, embed, image, video, encode, decode, color, RGB, luminance, brightness, merge, difference

### C. DOCUMENTS CONSIDERED TO BE RELEVANT

| Category* | Citation of document, with indication, where appropriate, of the relevant passages | Relevant to claim No. |
| --- | --- | --- |
| X | CN 107295344 A (YANG ZHENG) 24 October 2017 (2017-10-24) description, paragraphs 66-162 | 1, 3-5, 7-16, 24, 26-28 |
| Y | CN 107295344 A (YANG ZHENG) 24 October 2017 (2017-10-24) description, paragraphs 66-162 | 2, 6, 17, 19-20, 25-28 |
| Y | CN 113792564 A (BEIHANG UNIVERSITY) 14 December 2021 (2021-12-14) description, paragraphs 126-130 | 17, 19-20, 25-28 |
| Y | US 2020279454 A1 (ARISTOCRAT TECHNOLOGIES AUSTRALIA PTY LTD.) 03 September 2020 (2020-09-03) description, paragraph 47 | 2, 6, 26-28 |
| X | CN 107318030 A (YANG ZHENG) 03 November 2017 (2017-11-03) description, paragraphs 58-203 | 1, 3-5, 7-16, 24, 26-28 |
| Y | CN 107318030 A (YANG ZHENG) 03 November 2017 (2017-11-03) description, paragraphs 58-203 | 2, 6, 17, 19-20, 25-28 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **31 May 2024** | **01 June 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/122328** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 112651258 A (NANJING UNIVERSITY OF AERONAUTICS AND ASTRONAUTICS) 13 April 2021 (2021-04-13) entire document | 1-28 |
| A | US 2019259123 A1 (BARNETT MICHAEL) 22 August 2019 (2019-08-22) entire document | 1-28 |

Form PCT/ISA/210 (second sheet) (July 2022)

## INTERNATIONAL SEARCH REPORT
### Information on patent family members

International application No.

**PCT/CN2023/122328**

| Patent document cited in search report | | | Publication date (day/month/year) | Patent family member(s) | | | Publication date (day/month/year) |
|---|---|---|---|---|---|---|---|
| CN | 107295344 | A | 24 October 2017 | CN | 107295344 | B | 26 January 2021 |
| CN | 113792564 | A | 14 December 2021 | CN | 113792564 | B | 10 November 2023 |
| US | 2020279454 | A1 | 03 September 2020 | US | 2023082904 | A1 | 16 March 2023 |
| | | | | US | 2021209895 | A1 | 08 July 2021 |
| | | | | US | 11508209 | B2 | 22 November 2022 |
| | | | | AU | 2019203024 | A1 | 17 September 2020 |
| | | | | US | 10991199 | B2 | 27 April 2021 |
| CN | 107318030 | A | 03 November 2017 | | None | | |
| CN | 112651258 | A | 13 April 2021 | | None | | |
| US | 2019259123 | A1 | 22 August 2019 | US | 2019259124 | A1 | 22 August 2019 |
| | | | | US | 11557015 | B2 | 17 January 2023 |
| | | | | US | 2023119262 | A1 | 20 April 2023 |

Form PCT/ISA/210 (patent family annex) (July 2022)